# EUROPEAN PATENT APPLICATION

(11) **EP 2 639 281 A1**
(43) Date of publication of application: **18.09.2013**
(21) Application number: 13159511.8
(22) Date of filing: 15.03.2013
(51) Int. Cl.: C09J 153/02, C09J 7/02

(54) **Pressure-sensitive adhesive composition and pressure-sensitive adhesive sheet**

(30) Priority: 16.03.2012 JP 2012060664; 16.03.2012 JP 2012060665; 09.08.2012 JP 2012177534; 09.08.2012 JP 2012177535; 12.09.2012 JP 2012200907
(71) Applicant: NITTO DENKO CORPORATION, Ibaraki-shi, Osaka 567-8680 (JP)
(72) Inventor: Nakayama, Naoki, Ibaraki-shi, Osaka 567-8680 (JP); Nishiyama, Naoyuki, Ibaraki-shi, Osaka 567-8680 (JP); Okada, Yoshihiro, Ibaraki-shi, Osaka 567-8680 (JP); Wada, Shouhei, Ibaraki-shi, Osaka 567-8680 (JP)
(74) Representative: Grünecker, Kinkeldey, Stockmair & Schwanhäusser

(57) **Abstract**

The present invention provides a pressure-sensitive adhesive composition and a pressure-sensitive adhesive sheet comprising a layer formed from the said composition. The pressure-sensitive adhesive composition comprises, as a base polymer, a block copolymer of a mono-vinyl-substituted aromatic compound and a conjugated diene compound. The pressure-sensitive adhesive composition further comprises a tackifier resin (T_{H}) having a hydroxyl value of 80 mgKOH/g or higher.

## Description

### BACKGROUND OF THE INVENTION

### 1. Field of the Invention

The present invention relates to a pressure-sensitive adhesive composition comprising, as a base polymer, a block copolymer (e.g., a styrene-based block copolymer) of a mono-vinyl-substituted aromatic compound and a conjugated diene compound. The present invention also relates to a pressure-sensitive adhesive sheet that comprises a pressure-sensitive adhesive comprising such a copolymer as a base polymer.

The present application claims priority based on Japanese Patent Application Nos. 2012-060664 and 2012-060665 filed on March 16th, 2012, Japanese Patent Application Nos. 2012-177534 and 2012-177535 filed on August 9th, 2012, and Japanese Patent Application No. 2012-200907 filed on September 12th, 2012, and the entire contents of these applications are incorporated herein by reference.

### 2. Description of the Related Art

In general, pressure-sensitive adhesive (PSA) exists as a soft solid (a viscoelastic material) in a room temperature range and has a property to adhere easily to an adherend with some pressure applied. Taking advantage of such a property, PSA has been widely used as a means of attachment that works efficiently and produces dependable adhesion in various industrial fields from home appliances to automobiles, OA equipment, and so on. A typical composition of PSA comprises a base polymer and a tackifier resin. As the base polymer, a polymer that exhibits rubber elasticity at room temperature can be preferably used. For example, Japanese Patent Application Publication Nos. 2001-123140, 2001-342441 and H10-287858 disclose a PSA comprising a styrene-based block copolymer such as a styrene-isoprene-styrene block copolymer (SIS), a styrene-butadiene-styrene block copolymer (SBR), or the like.

### SUMMARY OF THE INVENTION

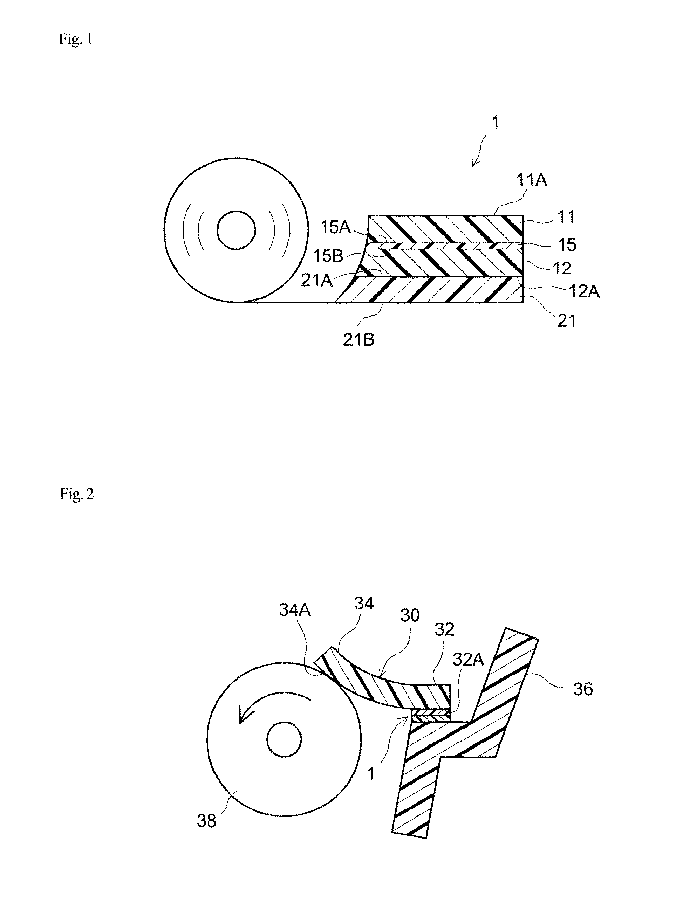

Because of the PSA's property to easily adhere to an adherend with some pressure applied, a joint by PSA tends to show low resistance against continuous stress applied to the joint (i.e., a low ability to resist the stress and maintain good adhesion). For instance, in an application shown in Fig. 2, area 32A on first end 32 of thick plastic blade (resin blade) 30 is fastened (attached) via double-faced PSA sheet 1 to a surface of plastic molding 36, and rotating roller 38 is placed closely to molding 36; and matters stuck on the roller surface are scraped off when roller 38 rotates while area 34A on second end 34 of blade 30 is pushed against the surface of roller 38 by the elastic force of blade 30. In such an application, because of the rotational friction by roller 38 and the elastic force by blade 30, the joint by double-faced PSA sheet 1 is subjected to continuous stress. Thus, it is useful to provide a PSA sheet capable of forming a joint that is unlikely to peel off in such an application.

One objective of the present invention is to provide a PSA composition capable of producing a PSA sheet that exhibits high resistance against continuous stress. Another related objective is to provide a PSA sheet that exhibits high resistance against continuous stress.

The PSA composition disclosed herein comprises a base polymer consisting of a block copolymer of a mono-vinyl-substituted aromatic compound and a conjugated diene compound. The PSA composition further comprises a tackifier resin (T_{H}) having a hydroxyl value of 80 mgKOH/g or higher. According to a PSA composition comprising such a base polymer and a tackifier resin (T_{H}), can be obtained a PSA sheet that exhibits excellent resistance against continuously applied stress. For instance, such a PSA sheet may be able to resist against flexural strain of a thick plastic film and maintain good adhesion.

The present specification also provides a PSA sheet comprising a PSA layer. The PSA layer comprises a base polymer consisting of a block copolymer of a mono-vinyl-substituted aromatic compound and a conjugated diene compound. The PSA layer further comprises a tackifier resin (T_{H}) having a hydroxyl value of 80 mgKOH/g or higher. A PSA sheet comprising such a PSA layer may exhibit excellent resistance against continuously applied stress. For instance, such a PSA sheet may be able to resist against flexural strain of a thick plastic film and maintain good adhesion.

### BRIEF DESCRIPTION OF THE DRAWINGS

Fig. 1 shows a cross-sectional view schematically illustrating the constitution of a PSA sheet according to an embodiment (a substrate-containing double-faced PSA sheet).
Fig. 2 shows a cross-sectional view schematically illustrating an application example of the PSA sheet.
Fig. 3 shows a diagram illustrating a method for testing the repulsion resistance.
Fig. 4 shows a diagram illustrating a method for testing the peel property under a constant load.
Fig. 5 shows a chart illustrating the results ofthe repulsion resistance test for double-faced PSA sheets al to a7 according to Experimental Example 1.
Fig. 6 shows a chart illustrating the peel properties of double-faced PSA sheets a1 to a7 according to Experimental Example 1 under a constant load in a hot/wet condition.
Fig. 7 shows a chart illustrating the results ofthe repulsion resistance test for double-faced PSA sheets c1 to c6 according to Experimental Example 3.
Fig. 8 shows a cross-sectional view schematically illustrating the constitution of a PSA sheet according to another embodiment (a substrate-free double-faced PSA sheet).
Fig. 9 shows a cross-sectional view schematically illustrating the constitution of a PSA sheet according to another embodiment (a substrate-containing single-faced PSA sheet).

### DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

In the drawings referenced below, a common reference numeral is assigned to members or sites producing the same effects, and duplicated descriptions are sometimes omitted or simplified. The embodiments described in the drawings are schematized for clear illustration of the present invention, and do not represent the accurate sizes or reduction scales of the PSA sheet to be provided as an actual product by the present invention.

As used herein, the term "PSA" refers to, as described earlier, a material that exists as a soft solid (a viscoelastic material) in a room temperature range and has a property to adhere easily to an adherend with some pressure applied. As defined in *"*Adhesion : Fundamental and Practice" by C. A. Dahlquist (McLaren & Sons (1966), P. 143), PSA referred to herein is a material that has a property satisfying complex tensile modulus E* (1Hz) < 10⁷ dyne/cm² (typically, a material that exhibits the said characteristics at 25 °C). The "base polymer" of a PSA refers to the primary component among rubbery polymers (polymers that exhibit rubber elasticity in a room temperature range) contained in the PSA, that is, a component accounting for 50 % by mass or more of all rubbery polymers.

As used herein, "block copolymer of a mono-vinyl-substituted aromatic compound and a conjugated diene compound" refers to a polymer comprising at least one each of a segment (segment A) that comprises a mono-vinyl-substituted aromatic compound as a primary monomer and a segment (segment B) that comprises a conjugated diene compound as a primary monomer, with the primary monomer being a copolymer component accounting for more than 50 % by mass (the same applies hereinafter). In general, the glass transition temperature of segment A is higher than that of segment B. Examples of a typical constitution of such a polymer include an ABA triblock copolymer having a triblock structure where segment B (soft segment) is coupled to segment A (hard segment) at each terminal, an AB diblock copolymer having a diblock structure comprising one segment A and one segment B, and the like.

As used herein, "styrene-based block copolymer" refers to a polymer comprising at least one styrene block. The "styrene block" refers to a segment comprising styrene as a primary monomer. A typical example of a styrene block referred to herein is a segment consisting essentially of styrene. "Styrene-isoprene block copolymer" refers to a polymer comprising at least one styrene block and at least one isoprene block (a segment comprising isoprene as a primary monomer). Typical examples of a styrene-isoprene block copolymer include a triblock copolymer having a triblock structure where an isoprene block (soft segment) is coupled to a styrene block (hard segment) at each terminal, a diblock copolymer having a diblock structure comprising one isoprene block and one styrene block, and the like. "Styrene-butadiene block copolymer" refers to a polymer comprising at least one styrene block and at least one butadiene block (a segment comprising butadiene as a primary monomer).

As used herein, "the styrene content" in a styrene-based block copolymer refers to the mass fraction of styrene contained in the total mass of the block copolymer. The styrene content can be measured by NMR (nuclear magnetic resonance spectroscopy).
The proportion of the diblock copolymer (which hereinafter may be referred to as the "diblock fraction" or "diblock ratio") contained in a styrene-based block copolymer can be determined by the following method. That is, a given styrene-based block copolymer is dissolved in tetrahydrofuran (THF) and subjected to high-performance liquid chromatography at a temperature of 40°C with THF as the mobile phase passing at a flow rate of 1 mL/min through four linearly connected columns consisting of two each of liquid chromatography columns GS5000H and G4000H both available from Tosoh Corporation; from the resulting chromatogram, the area of the peak corresponding to the diblock copolymer is determined; and the diblock fraction is determined as the percentage of the peak's area relative to the total area of all peaks.

### <Examples of constitution of PSA sheet>

The PSA sheet (which can be a long sheet such as tape) disclosed herein may have, for example, a form of an adhesively double-faced PSA sheet having the cross-sectional structure shown in Fig. 1. Double-faced PSA sheet 1 comprises plastic film 15 as a substrate as well as first and second PSA layers 11 and 12 supported by the two faces of substrate 15, respectively. More specifically, first PSA layer 11 and second PSA layer 12 are provided on first face 15A and second face 15B of substrate 15, respectively, with both faces 15A and 15B being non-releasing. Prior to use (before adhered to an adherend), as shown in Fig. 1, double-faced PSA sheet 1 can be in a roll wherein PSA sheet 1 is wound along with release liner 21 having front face (release face) 21A and back face (release face) 21B. In double-faced PSA sheet 1 in such an embodiment, the surface (second adhesive face 12A) of second PSA layer 12 and the surface (first adhesive face 11A) of first PSA layer I are protected with front face 21A and back face 21B of release liner 21, respectively. Alternatively, it may be in an embodiment where first adhesive face 11A and second adhesive face 12A are protected with two separate release liners, respectively.

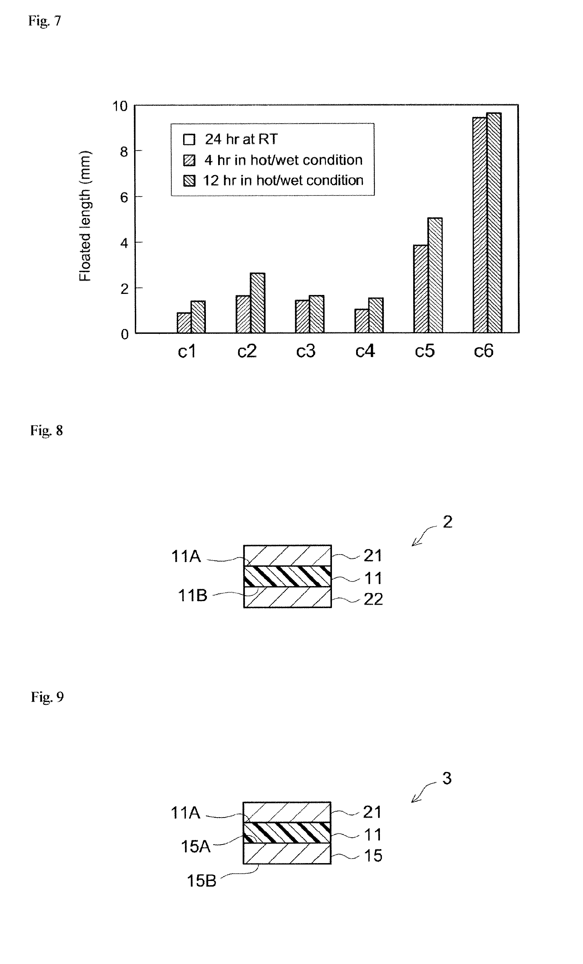

The art disclosed herein can be applied preferably to a substrate-containing double-faced PSA sheet as shown in Fig.1, and can also be applied to double-faced PSA sheet 2 that is free of a substrate (i.e., having no substrate) as shown in Fig. 8. Prior to use, double-faced PSA sheet 2 can be, for instance, in an embodiment as shown in Fig. 8 where first adhesive face 11A and second adhesive face 11B of substrate-free PSA layer 11 are protected with release liners 21 and 22, respectively, with each release liner comprising a release face at least on the PSA-layer-side surface (front face). Alternatively, it may be in an embodiment without release liner 22, wherein both the two faces of release liner 21 are release faces, and PSA layer 11 is overlaid therewith and wound in a roll so that the back face of release liner 21 contacts and protects second adhesive face 11B.

The art disclosed herein can be applied to adhesively single-faced, substrate-containing PSA sheet 3 as shown in Fig. 9 as well, with the PSA sheet comprising substrate 15 and PSA layer 11 supported by first face (non-release face) 15A of the substrate. Prior to use, PSA sheet 3 can be, for instance, in an embodiment as shown in Fig. 9 where surface (adhesive face) 11A of PSA layer 11 is protected with release liner 21 comprising a release face at least on the PSA-layer-side surface (front face). Alternatively, it may be in an embodiment without release liner 21, wherein substrate 15 comprises a release face on second face 15B, and substrate-containing PSA sheet 3 is wound in a roll so that second face 15B of substrate 15 contacts and protects first adhesive face 11A.

The art disclosed herein is described mostly with reference to examples of embodiments applicable to a substrate-containing double-faced PSA sheet or a PSA layer therein, but these are not to limit the application of the said art.

### <Base polymer>

In the art disclosed herein, PSA comprises as a base polymer a block copolymer of a mono-vinyl-substituted aromatic compound and a conjugated diene compound, where the PSA may be construed as the solids content of a PSA composition or as constituents of a PSA layer. The mono-vinyl-substituted aromatic compound refers to a compound in which a functional group containing a vinyl group is bonded to an aromatic ring. Typical examples of the aromatic ring include a benzene ring (which can be a benzene ring substituted with a functional group (e.g., an alkyl group) containing no vinyl groups). Examples of the mono-vinyl-substituted aromatic compound include styrene, α-methyl styrene, vinyl toluene, vinyl xylene, and the like. Examples of the conjugated diene compound include 1,3-butadiene, isoprene, and the like. Among such block copolymers, one species can be used solely, or two or more species can be used together as the base polymer.

Segment A (hard segment) in the block copolymer comprises the mono-vinyl-substituted aromatic compound (for which, two or more species can be used together) at a copolymerization ratio of preferably 70 % by mass or greater (more preferably 90 % by mass or greater, or it can be essentially 100 % by mass). Segment B (soft segment) in the block copolymer comprises the conjugated diene compound (for which, two or more species can be used) at a copolymerization ratio of preferably 70 % by mass or greater (more preferably 90 % by mass or greater, or it can be essentially 100 % by mass). According to such a block copolymer, a PSA sheet of higher performance can be obtained.

The block copolymer may be a diblock copolymer, a triblock copolymer, a radial copolymer , a mixture of these, or the like. In a triblock copolymer or a radial copolymer, it is preferable that segment A (e.g., a styrene block) is placed at a terminal of the polymer chain. Segment A placed terminally on the polymer chain is likely to aggregate to form a domain, whereby pseudo crosslinks are formed, resulting in increased cohesive strength of the PSA. In the art disclosed herein, from the standpoint of the adhesive strength (peel strength) to an adherend and the repulsion resistance (especially, the repulsion resistance under a hot/wet condition), a preferable block copolymer has a diblock fraction of 30 % by mass or greater (more preferably 40 % by mass or greater, even more preferably 50 % by mass or greater, or especially preferably 60 % by mass or greater, typically 65 % by mass or greater, e.g., 70 % by mass or greater). From the standpoint ofthe resistance against peeling under a constant load (the peel property under a constant load), can be used a block copolymer having a diblock fraction of preferably 90 % by mass or smaller (more preferably 85 % by mass or smaller, e.g., 80 % by mass or smaller). In an embodiment of the art disclosed herein, can be used a block copolymer having a diblock fraction of preferably 30 to 80 % by mass (more preferably 40 to 80 % by mass, even more preferably 50 to 80 % by mass, e.g., 50 to 70 % by mass). In another embodiment (e.g., an embodiment as described later wherein terpene-phenol resins A and B having different hydroxyl values are contained as the tackifier resin), can be used a block copolymer having a diblock fraction of preferably 30 to 90 % by mass (typically 40 to 90 % by mass, or more preferably 50 to 90 % by mass, e.g., 60 to 85 % by mass).

### < Styrene-based block copolymer>

In an embodiment of the art disclosed herein, the base polymer is a styrene-based block copolymer. For instance, it can be practiced preferably in an embodiment wherein the base polymer comprises at least one of a styrene-isoprene block copolymer and a styrene-butadiene block copolymer. It is preferable that the styrene-based block copolymer contained in the PSA comprises either a styrene-isoprene block copolymer at a ratio of 70 % by mass or greater, a styrene-butadiene block copolymer at a ratio of 70% by mass or greater, or a styrene-isoprene block copolymer and a styrene-butadiene block copolymer at a combined ratio of 70 % by mass or greater. In a preferable embodiment, essentially all (e.g., 95 to 100% by mass) of the styrene-based block copolymer is a styrene-isoprene block copolymer. In another preferable embodiment, essentially all (e.g., 95 to 100 % by mass) of the styrene-based block copolymer is a styrene-butadiene block copolymer. According to these compositions, can be preferably obtained a PSA sheet that exhibits excellent resistance against continuously applied stress also in a good balance with other adhesive properties.

The styrene-based block copolymer can be a diblock copolymer, a triblock copolymer, a radial copolymer, a mixture of these, or the like. In a triblock copolymer and a radial copolymer, it is preferable that a styrene block is placed at a terminal of the polymer chain. The styrene block placed terminally on the polymer chain is likely to aggregate to form a domain, whereby pseudo crosslinks are formed, resulting in increased cohesive strength ofthe PSA. In the art disclosed herein, from the standpoint of the adhesive strength (peel strength) to an adherend and the repulsion resistance (especially, the repulsion resistance under a hot/wet condition), a preferable styrene-based block copolymer has a diblock fraction of 30 % by mass or greater (more preferably 40 % by mass or greater, even more preferably 50 % by mass or greater, or especially preferably 60 % by mass or greater, typically 65 % by mass or greater, e.g., 70 % by mass or greater). From the standpoint of the resistance against peeling under a constant load (the peel property under a constant load), can be used a styrene-based block copolymer having a diblock fraction of preferably 90 % by mass or smaller (more preferably 85 % by mass or smaller, e.g., 80 % by mass or smaller). In an embodiment of the art disclosed herein, can be used a styrene-based block copolymer having a diblock fraction of preferably 30 to 80 % by mass (more preferably 40 to 80 % by mass, even more preferably 50 to 80 % by mass, e.g., 50 to 70 % by mass). In another embodiment (e.g., an embodiment as described later wherein terpene-phenol resins A and B having different hydroxyl values are contained as the tackifier resin), can be used a styrene-based block copolymer having a diblock fraction of preferably 30 to 90 % by mass (typically 40 to 90 % by mass, or more preferably 50 to 90 % by mass, e.g., 60 to 85 % by mass).

The styrene content in the styrene-based block copolymer can be, for instance, 5 to 40 % by mass. From the standpoint of the repulsion resistance and the peel property under a constant load, in usual, it is preferable that the styrene content is 10 % by mass or greater (more preferably greater than 10 % by mass, e.g., 12 % by mass or greater). From the standpoint of the PSA's cohesive strength (holding power) and adhesive strength to an adherend, the styrene-based block copolymer has a styrene content of preferably 35 % by mass or less (typically 30 % by mass or less, or more preferably 25 % by mass or less, e.g., less than 20 % by mass). In an embodiment of the art disclosed herein, can be used a styrene-based block copolymer having a styrene content of preferably 10 to 35 % by mass (more preferably greater than 15% by mass, but less than 24 % by mass, e.g., 16 to 23 % by mass). In another embodiment (e.g., an embodiment as described later wherein terpene-phenol resins A and B having different hydroxyl values are contained as the tackifier resin), can be preferably used a styrene-based block copolymer having a styrene content of 12 % by mass or greater, but less than 20 % by mass.

### <Tackifier resin>

The PSA in the art disclosed herein comprises a tackifier resin in addition to the base polymer (e.g., a styrene-based block copolymer). As the tackifier resin, can be used one, two or more species selected from various tackifier resins such as known petroleum resins, terpene resins, rosin-based resins, rosin-derivative resins, ketone-based resins, and the like. Examples ofthe petroleum resin include aliphatic (C5-based) petroleum resins, aromatic (C9-based) petroleum resins, C5/C9 copolymer-based petroleum resins, alicyclic petroleum resins, hydrogenated products of these, and the like. Examples of the terpene resins include terpene resins such as poly-α-pinene, poly-β-pinene, poly-dipentene, etc. (which hereinafter may be referred to as "unmodified terpene resins" to be clearly distinguished from modified terpene resins listed later); modified terpene resins obtainable from these via a modification (phenol modification, styrene modification, hydrogenation, hydrocarbon modification, or the like); and so on. Examples of the modified terpene resin include terpene-phenol resins, styrene-modified terpene resins, hydrogenated terpene resins, and the like.

Examples ofthe rosin-based resin include unmodified rosins (raw rosins) such as gum rosin, wood rosin, tall-oil rosin, etc.; modified rosins obtainable from these unmodified rosins via a modification such as hydrogenation, disproportionation, polymerization, etc. (hydrogenated rosins, disproportionated rosins, polymerized rosins, other chemically-modified rosins, etc.); and the like.
Examples ofthe rosin-derived resins include rosin esters such as unmodified rosins esterified with alcohols (i.e., esterification products of unmodified rosins) and modified rosins (hydrogenated rosins, disproportionated rosins, polymerized rosins, etc.) esterified with alcohols (i.e., esterification products of modified rosins), and the like; unsaturated fatty-acid-modified rosins obtainable from unmodified rosins and modified rosins (hydrogenated rosin, disproportionated rosin, polymerized rosin, etc.) via modifications with unsaturated fatty acids; unsaturated fatty-acid-modified rosin esters obtainable from rosin esters via modifications with unsaturated fatty acids; rosin alcohols obtainable via reduction of carboxyl groups from unmodified rosins, modified rosins (hydrogenated rosins, disproportionated rosins, polymerized rosin, etc.), unsaturated fatty-acid-modified rosins or unsaturated fatty-acid-modified rosin esters; metal salts of rosins including unmodified rosins, modified rosins, various rosin derivatives, etc.(in particular, metal salts of rosin esters); rosin phenol resins obtainable from rosins (unmodified rosins, modified rosins, various rosin derivatives, etc.) via addition ofphenol in the presence of an acid catalyst followed by thermal polymerization; and so on.

### <Hydroxyl-rich tackifier resin (T_{H})>

The PSA in the art disclosed herein is characterized by comprising a tackifier resin (T_{H}) having a hydroxyl value (OH value) of 80 mgKOH/g or higher (typically 80 mgKOH/g to 250 mgKOH/g, e.g., 80 mgKOH/g to 220 mgKOH/g). A PSA having a composition comprising such a tackifier resin (T_{H}) may exhibit, for instance, significantly higher resistance (especially under a hot/wet condition) against continuous stress as compared to a PSA having the same composition, but with all the tackifier resin (T_{H}) replaced with a tackifier resin having a low hydroxyl value (e.g., a hydroxyl value of about 0 to 60 mgKOH/g). Thus, according to a PSA having a composition comprising the tackifier resin (T_{H}), can be obtained a PSA sheet having a good balance of resistance against continuous stress and adhesive strength.

The tackifier resin (T_{H}) has a hydroxyl value of preferably 90 mgKOH/g or higher (typically 90 mgKOH/g or higher, but lower than 200 mgKOH/g, e.g., 90 mgKOH/g to 180 mgKOH/g), or more preferably 100 mgKOH/g or higher (typically 100 mgKOH/g to 180 mgKOH/g, or even more preferably higher than 100 mgKOH/g, but 180 mgKOH/g or lower). In a preferable embodiment, can be used a tackifier resin (T_{H}) having a hydroxyl value of preferably 110 mgKOH/g to 180 mgKOH/g (more preferably 120 mgKOH/g to 170 mgKOH/g, e.g., 125 mgKOH/g to 170 mgKOH/g).

As the hydroxyl value, can be used a value measured by the potentiometric titration method specified in JIS K 0070:1992. Details of the method are described below.

### [Method for measuring hydroxyl value]

1. Reagents
   (1) As the acetylation reagent, is used a solution prepared by mixing with sufficient stirring about 12.5 g (approximately 11.8 mL) of anhydrous acetic acid and pyridine added up to a total volume of 50 mL. Alternatively, is used a solution prepared by mixing with sufficient stirring about 25 g (approximately 23.5 mL) of anhydrous acetic acid and pyridine up to a total volume of 100 mL.
   (2) As the titrant, is used a 0.5 mol/L potassium hydroxide (KOH) solution in ethanol.
   (3) For others, toluene, pyridine, ethanol and distilled water should be ready for use.
2. Procedures
   (1)Approximately 2 g of analyte is accurately weighed out in a flat-bottom flask, 5 mL of the acetylation reagent and 10 mL of pyridine are added, and an air condenser is placed on.
   (2) The flask is heated in a bath at 100 °C for 70 minutes and then cooled. From the top of the condenser, 35 mL of toluene is added as a solvent and stirred. Subsequently, 1 mL of distilled water is added and the resultant is stirred to decompose any remaining anhydrous acetic acid. The flask is heated in the bath again for 10 minutes to complete the decomposition and then cooled.
   (3) After rinsed with 5 mL of ethanol, the condenser is removed. Subsequently, 50 mL of pyridine is added as a solvent and the resultant is stirred.
   (4) Using a volumetric pipette, is added 25 mL of the 0.5 mol/L KOH ethanol solution.
   (5) Potentiometric titration is carried out with the 0.5 mol/L KOH ethanol solution. The inflection point in the resulting titration curve is taken as the final point.
   (6) For a blank titration, procedures (1) to (5) are carried out without addition of the analyte.
3. Calculations
   The hydroxyl value is calculated by the following equation:

   Hydroxyl value (mgKOH/g) = [(B - C) × f × 28.05]/S + D

   wherein:
   B is the volume (mL) of the 0.5 mol/L KOH ethanol solution used in the blank titration;
   C is the volume (mL) of the 0.5 mol/L KOH ethanol solution used to titrate the analyte;
   f is the factor of the 0.5 mol/L KOH ethanol solution;
   S is the mass of analyte (g);
   D is the acid value;
   28.05 is one half the molecular weight of KOH.

For practicing the art disclosed herein, while it is not necessary to reveal why a PSA having the said composition can solve the problem described earlier, for instance, it can be considered as follows: With respect to the PSA disclosed herein which has a composition comprising a base polymer disclosed herein (typically, a styrene-based block copolymer) and a bydroxyl-rich tackifier resin (T_{H}) (e.g., a terpene-phenol resin), it is likely that the base polymer and the tackifier resin (T_{H}) undergo microphase separation to a suitable extent. A PSA in such a state may form a system in which domains with a high hydroxyl content (domains largely containing the tackifier resin (T_{H})) are dispersed in a bulk largely containing the base polymer. It is considered that because of the interactions occurring among the domains (separate phases) with a high hydroxyl content, the physical properties of the bulk and the physical properties produced by the presence of separate phases are brought out in a good balance, whereby the resistance against continuous stress (especially, the resistance under a hot/wet condition) is improved. Herein, the interactions are not limited to interactions arising from chemical bonds across separate phases.

As the tackifier resin (T_{H}), among the various types cited earlier, a tackifier resin having a hydroxyl value equal to or higher than a prescribed value can be used solely, or two or more species of such tackifier resins can be suitably used in combination. In a preferable embodiment, as the tackifier resin (T_{H}), at least a terpene-phenol resin is used. It is preferable that the tackifier resin (T_{H}) contained in the PSA comprises a terpene-phenol resin at a ratio of 50 % by mass or greater (more preferably 70 % by mass or greater, e.g., 90 % by mass or greater), or essentially all (e.g., 95 to 100 % by mass, or even 99 to 100 % by mass) can be a terpene-phenol resin. With respect to a terpene-phenol resin, the hydroxyl value can be adjusted as desired by changing the copolymerization ratio of phenol; and therefore, a resin having a high hydroxyl value can be readily obtained. In addition, a terpene-phenol resin is suitable for solving the problem because when combined with the base polymer in the art disclosed herein, the system is likely to undergo microphase separation.

Herein, "terpene-phenol resin" refers to a polymer containing terpene residue and phenol residue, and the scope thereof encompasses both a terpene-phenol copolymer resin and a phenol-modified terpene resin, with the former being a copolymer of a terpene and a phenolic compound, and the latter being a phenol-modification product of a terpene homopolymer or a terpene copolymer (a terpene resin, typically an unmodified terpene resin). Preferable examples of a terpene in the terpene-phenol resin include mono-terpenes such as α-pinene, β-pinene, limonene (including *d*-limonene, *l-*limonene, and *d*/*l*-limonene (dipentene)), and the like.

A preferable tackifier resin (T_{H}) has a softening point of 100 °C or above (typically, above 100 °C, e.g., 110°C or above). A particularly preferable tackifier resin (T_{H}) has a softening point of 120°C or above (typically, above 120 °C, preferably 125 °C or above, e.g., 130°C or above). According to such a tackifier resin (T_{H}) having a high hydroxyl value and a high softening point, the microphase separation is likely to occur; and also because the thermostability of the tackifier resin (T_{H}) increases, can be obtained even greater properties (e.g., increased repulsion resistance or improved peel property under a constant load under a hot/wet condition). On the other hand, when the softening point is too high, the adhesive strength (especially, the adhesive strength at a low temperature) to an adherend may tend to decrease. Thus, in usual, can be preferably used a hydroxyl-rich tackifier resin (T_{H}) having a softening point of 200 °C or below (e.g., 100 °C or above, but 200 °C or below). A more preferable tackifier resin (T_{H}) has a softening point of 120°C or above, but 180°C or below (e.g., 125°C or above, but 170 °C or below).

Herein, the softening point of a tackifier resin is defined as a value measured based on the softening point test method (ring and ball method) specified in JIS K 5902 and JIS K 2207. In particular, a sample is quickly melted at a lowest possible temperature, and with caution to avoid bubble formation, the melted sample is poured into a ring to the top, with the ring being placed on top of a flat metal plate. After cooled, any portion of the sample risen above the plane including the upper rim of the ring is sliced off with a small knife that has been somewhat heated. Following this, a support (ring support) is placed in a glass container (heating bath) having a diameter of 85 mm or larger and a height of 127 mm or larger, and glycerin is poured into this to a depth of 90 mm or deeper. Then, a steel ball (9.5 mm diameter, weighing 3.5 g) and the ring filled with the sample are immersed in the glycerin while preventing them from touching each other, and the temperature of glycerin is maintained at 20°C ± 5 °C for 15 minutes. The steel ball is then placed at the center of the surface of the sample in the ring, and this is placed on a prescribed location of the support. While keeping the distance between the ring top and the glycerin surface at 50 mm, a thermometer is placed so that the center of the mercury ball of the thermometer is as high as the center of the ring, and the container is heated evenly by projecting a Bunsen burner flame at the midpoint between the center and the rim of the bottom of the container. After the temperature has reached 40 °C from the start of heating, the rate of the bath temperature rise must be kept at 5 °C ± 0.5 °C per minute. As the sample gradually softens, the temperature at which the sample flows out of the ring and finally touches the bottom plate is read as the softening point. Two or more measurements of softening point are performed at the same time, and their average value is used.

### <Hydroxyl-poor tackifier resin (T_{L})>

In addition to the hydroxyl-rich tackifier resin (T_{H}), the PSA disclosed herein may further comprise a hydroxyl-poor tackifier resin (T_{L}) having a hydroxyl value of zero or higher, but 80 mgKOH/g or lower. As such a tackifier resin (T_{L}), among the various types cited earlier, a tackifier resin having a hydroxyl value in the said range can be used solely, or two or more of such tackifier resins can be suitably used in combination. For example, can be used petroleum-based resins (e.g., C5-based petroleum resins), terpene resins (e.g., β-pinene polymers, terpene-phenol resins, etc.), rosin-based resins (e.g., polymerized rosins), rosin-derived resins (e.g., esterification products of polymerized rosins) and the like, each having a hydroxyl value of zero or higher, but lower than 80 mgKOH/g (typically zero or higher, but lower than 60 mgKOH/g, preferably zero or higher, but lower than 40 mgKOH/g, e.g., zero or higher, but lower than 20 mgKOH/g).

A PSA according to a preferable embodiment comprises, as the hydroxyl-poor tackifier resin (T_{L}), a tackifier resin (which hereinafter may be referred to as "low softening point resin") having a softening point below 120 °C (typically, 80 °C or above, but below 120 °C, or more preferably 100 °C or above, but below 120 °C, e.g., 110 °C or above, but below 120 °C). A PSA having such a composition may exhibit high adhesive strength to an adherend as well as excellent resistance against continuous stress (e.g., peel property under a constant load). The primary component (i.e., a component accounting for 50 % by mass or greater) of the low softening point resin, can be, for instance, a petroleum resin, a terpene resin, a combination of a petroleum resin and a terpene resin, or the like. As the petroleum resin, can be preferably used a C5-based petroleum resin (which can be obtained typically by polymerizing a residue of a C5-fraction remaining after extracting and separating out isoprene and cyclopentadiene therefrom, with the C5-fraction being obtainable by decomposition of naphtha). As the terpene resin, can be used preferably a polymer of a mono-terpene such as α-pinene, β-pinene, limonene (including *d-*limonene, *l*-limonene, and *d*/*l*-limonene (dipentene)), and the like. From the standpoint of the adhesive strength and the miscibility, it is preferable that the primary component of the low softening point resin is a terpene resin (e.g., poly-β-pinene). Essentially all (e.g., 95 to 100 % by mass) of the low softening point resin can be a terpene resin.

The low softening point resin content can be, for instance, 10 to 120 parts by mass relative to 100 parts by mass of the base polymer, and it is usually suitable to be 15 to 90 parts by mass (e.g., 20 to 70 parts by mass). When the low softening point resin content is excessively low, the adhesive strength to an adherend may tend to turn out lower. When the low softening point resin content is excessively high, the adhesive strength (especially, the adhesive strength at a low temperature) may tend to turn out lower.

The PSA disclosed herein may comprise, as the hydroxyl-poor tackifier resin (T_{L}), a tackifier resin having a softening point of 120 °C or above, but 200 °C or below (typically 120 °C or above, but 180 °C or below, e.g., 125 °C or above, but 170 °C or below). As such a tackifier resin having a low hydroxyl value and a high softening point, for instance, can be used a polymerized rosin, an esterification product of a polymerized rosin, a terpene-phenol resin, or the like. When the softening point is too low, the resistance against continuous load may tend to turn out lower. When the softening point is too high, the adhesive strength (especially, the adhesive strength at a low temperature) to an adherend may tend to turn out lower.

The PSA disclosed herein can be practiced preferably in an embodiment comprising a tackifier resin having a softening point of 120 °C or above (which hereinafter may be referred to as "high softening point resin"), wherein 25 % by mass or greater (more preferably 30 % by mass or greater) of all the high softening point resin is a hydroxyl-rich tackifier resin (T_{H}) (e.g., a terpene-phenol resin). The high softening point resin may comprise a hydroxyl-rich tackifier resin (T_{H}) at a ratio of preferably 50 % by mass or greater (more preferably 70 % by mass or greater, or even more preferably 80 % by mass or greater, e.g., 90 % by mass or greater). Alternatively, essentially all (e.g., 95 to 100 % by mass) of the high softening point resin can be a hydroxyl-rich tackifier resin (T_{H}).

The hydroxyl-rich tackifier resin (T_{H}) content can be, for instance, 10 to 100 parts by mass relative to 100 parts by mass of the base polymer. From the standpoint of the resistance against continuous stress, in usual, the tackifier resin (T_{H}) content is suitably 15 to 100 parts by mass (typically 20 to 100 parts by mass), or preferably more than 35 parts by mass, but 80 parts by mass or less (e.g., 40 to 70 parts by mass). When the tackifier resin (T_{H}) content is too high, the adhesive strength may tend to turn out lower. The art disclosed herein can be practiced preferably in an embodiment comprising as the tackifier resin (T_{H}) a terpene-phenol resin having a hydroxyl value of 80 mgKOH/g or higher (more preferably 100 mgKOH/g or higher, e.g., higher than 100 mgKOH/g) in an amount of 20 parts by mass or greater (preferably 35 parts by mass or greater) relative to 100 parts by mass of the base polymer. In usual, relative to 100 parts by mass of the base polymer, the terpene-phenol resin content is suitably 100 parts by mass or less, or preferably 80 parts by mass or less, for instance, 70 parts by mass or less.

In usual, relative to 100 parts by mass of the base polymer, the tackifier resin content (regardless of the hydroxyl value) is suitably 20 parts by mass or greater (typically 20 to 200 parts by mass), or preferably 30 to 150 parts by mass (e.g., 50 to 150 parts by mass). When the tackifier resin content is too high, the adhesive strength (especially, the adhesive strength at a low temperature) may tend to turn out lower. When the tackifier resin content is too low, the resistance (repulsion resistance, peel property under a constant load, etc.) against continuous stress may tend to turn out lower.
When the PSA disclosed herein comprises a hydroxyl-poor tackifier resin (T_{L}) in addition to a hydroxyl-rich tackifier resin (T_{H}), it is preferable to use them at a T_{L}-to-T_{H} mass ratio of 1:5 to 3:1 (more preferably 1:5 to 2:1). The art disclosed herein can be practiced preferably in an embodiment where the T_{H} content is higher than the T_{L} content (e.g., with the T_{L}-to-T_{H} mass ratio being 1:1.2 to 1:5). According to such an embodiment, can be obtained a PSA sheet that exhibits even higher resistance against continuous stress.
When the PSA disclosed herein comprises a low softening point resin and a high softening point resin, it is preferable to use them at a mass ratio ([low softening point resin]:[high softening point resin]) of 1:5 to 3:1 (more preferably 1:5 to 2:1). The art disclosed herein can be practiced preferably in an embodiment where the high softening point resin content is higher than the low softening point resin content (e.g., an embodiment where the [low softening point resin]:[high softening point resin] mass ratio is 1:1.2 to 1:5). According to such an embodiment, can be obtained a PSA sheet that exhibits even higher resistance (e.g., peel property under a constant load) against continuous stress.

### <Combination of terpene-phenol resins having different hydroxyl values>

The PSA composition disclosed herein can be practiced preferably in an embodiment comprising a base polymer consisting of a block copolymer of a mono-vinyl-substituted aromatic compound and a conjugated diene compound, and further comprising a tackifier resin, with the tackifier resin comprising at least terpene-phenol resin A and terpene-phenol resin B. Herein, terpene-phenol resin A and terpene-phenol resin B are typically selected such that terpene-phenol resin A and terpene-phenol resin B have hydroxyl values A_{OH} (mgKOH/g) and B_{OH} (mgKOH/g), respectively, with the values satisfying the inequality A_{OH} > B_{OH}. By using such terpene-phenol resins A and B in combination, for example, the peel strength (especially, the peel strength after aged) of the PSA sheet can be increased.

It is usually suitable to select terpene-phenol resins A and B such that the difference between their hydroxyl values A_{OH} and B_{OH}, i.e., A_{OH} - B_{OH}, is larger than zero, but 200 mgKOH/g or smaller. In a preferable embodiment, A_{OH} - B_{OH} is 5 mgKOH/g to 150 mgKOH/g (typically 10 mgKOH/g to 120 mgKOH/g, or more preferably 15 mgKOH/g to 100 mgKOH/g, e.g., 20 mgKOH/g up to 80 mgKOH/g).

The hydroxyl values of terpene-phenol resins A and B are not limited, respectively. For example, each of A_{OH} and B_{OH} can be 80 mgKOH/g or higher (typically 80 mgKOH/g to 250 mgKOH/g, preferably 80 mgKOH/g to 220 mgKOH/g, e.g., 90 mgKOH/g to 160 mgKOH/g), or each of A_{OH} and B_{OH} can be lower than 80 mgKOH/g (typically zero or higher, but lower than 80 mgKOH/g, or preferably 10 mgKOH/g or higher, but lower than 80 mgKOH/g, e.g., 20 mgKOH/g to 70 mgKOH/g). Alternatively, A_{OH} can be 80 mgKOH/g or higher while B_{OH} is lower than 80 mgKOH/g. In a preferable embodiment, A_{OH} is 80 mgKOH/g or higher (typically 80 mgKOH/g to 160 mgKOH/g, or preferably 80 mgKOH/g to 140 mgKOH/g, e.g., 90 mgKOH/g to 120 mgKOH/g) while B_{OH} is lower than 80 mgKOH/g (typically zero or higher, but lower than 80 mgKOH/g, or preferably 10 mgKOH/g or higher, but lower than 80 mgKOH/g, e.g., 20 mgKOH/g to 70 mgKOH/g), with A_{OH} - B_{OH} being 10 mgKOH/g or larger (preferably 20 mgKOH/g or larger, e.g., 30 mgKOH/g or larger, but typically 100 mgKOH/g or smaller).

The terpene-phenol resins A and B contents can each be I part by mass or more relative to 100 parts by mass of the base polymer. In order to better bring out the effects of terpene-phenol resins A and B used together, it is suitable that each of the terpene-phenol resins A and B contents is 5 parts by mass or greater (preferably 10 parts by mass or greater, e.g., 15 parts by mass or greater) relative to 100 parts by mass of the base polymer. From the standpoint of the adhesive strength (especially, the adhesive strength at a low temperature) to an adherend, in usual, the terpene-phenol resins A and B contents combined are suitably 100 parts by mass or less, preferably 90 parts by mass or less, or more preferably 80 parts by mass or less (e.g., 70 parts by mass or less), all relative to 100 parts by mass of the base polymer. For instance, can be preferably employed an embodiment where the terpene-phenol resins A and B contents combined are 15 to 80 parts by mass (typically 25 to 60 parts by mass) relative to 100 parts by mass of the base polymer.

The mass ratio (m_{A}:m_{B}) of the terpene-phenol resin A content m_{A} to the terpene-phenol resin B content m_{B} can be, for instance, 1:10 to 10:1. From the standpoint of the balance between the adhesive strength (peel strength) to an adherend and the repulsion resistance (especially, the repulsion resistance under a hot/wet condition) or the peel property under a constant load (especially, the peel property under a constant load in a hot/wet condition), in usual, it is suitable that the mass ratio (m_{A}:m_{B}) is 1:5 to 5:1, for example, 1:3 to 3:1. In a preferable embodiment, m_{A} and m_{B} can be selected so as to obtain a mass ratio value m_{A}/m_{B} of 0.7 to 10 (more preferably 0.8 to 5, typically 0.9 to 4, e.g., 1 to 3). According to such an embodiment, can be obtained a PSA sheet that exhibits excellent resistance against continuous stress as well as long-term stable adhesive properties (e.g., peel strength).

The softening points of terpene-phenol resins A and B are not limited, respectively. For example, each of terpene-phenol resins A and B can have a softening point of 120 °C or above (typically above 120 °C, preferably 125 °C or above, e.g., 130 °C or above, but typically 180 °C or below), or each can be below 120 °C. Alternatively, one of terpene-phenol resins A and B can have a softening point of 120 °C or above while the other has a softening point below 120 °C. In a preferable embodiment, each of terpene-phenol resins A and B has a softening point in a range of 120 °C to 170 °C. For example, can be used terpene-phenot resin A having a softening point of 120 °C to 170 °C and a hydroxyl value of 80 mgKOH/g to 140 mgKOH/g in combination with terpene-phenol resin B having a softening point of 120 °C to 170 °C and a hydroxyl value lower than 80 mgKOH/g (e.g., 20 mgKOH/g to 70 mgKOH/g).

The PSA composition disclosed herein may comprise, as the tackifier resin, another terpene-phenol resin besides terpene-phenol resins A and B. When the PSA composition comprises three or more species of terpene-phenol resin, between the top two species selected in decreasing order of the amount contained based on the mass among all terpene-phenol resins, terpene-phenol resin A is the one having a higher hydroxyl value and terpene-phenol resin B is the one having a lower hydroxyl value. If three different species of terpene-phenol resin are contained at a mass ratio of 1:1:1 with the three species accounting for the largest amounts based on the mass, terpene-phenol resin A is the one having the highest hydroxyl value and terpene-phenol resin B is the one having the lowest hydroxyl value among the three.

### <Isocyanate compound>

The art disclosed herein can be practiced preferably in an embodiment where the PSA further comprises an isocyanate compound in addition to a base polymer and a tackifier resin. According to such an embodiment, the resistance against continuous stress (e.g., the repulsion resistance) can be further increased. Although why such an effect is produced is not necessarily clear, it is considered that, for instance, crosslinks are formed among separate phases in the microphase-separated system, whereby more stable effect to increase the properties can be produced.

As the isocyanate compound, can be used preferably a multifunctional isocyanate (which refers to a compound having an average oftwo or more isocyanate groups per molecule, including a compound having an isocyanurate structure). As the multifunctional isocyanate, can be used one, two or more species selected from various isocyanate compounds (polyisocyanates) containing two or more isocyanate groups per molecule. Examples of such a multifunctional isocyanate include aliphatic polyisocyanates, alicyclic polyisocyanates, aromatic polyisocyanates, and the like.

Examples of an aliphatic polyisocyanate include 1,2-ethylene diisocyanate; tetramethylene diisocyanates such as 1,2-tetramethylene diisocyanate, 1,3-tetramethylene diisocyanate, 1,4-tetramethylene diisocyanate, etc.; hexamethylene diisocyanates such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate, 2,5-hexamethylene diisocyanate, etc.; 2-methyl-1,5-pentane diisocyanate, 3-methyl-1,5-pentane diisocyanate, lysine diisocyanate, and the like.

Examples of an alicyclic polyisocyanate include isophorone diisocyanate; cyclohexyl diisocyanates such as 1,2-cyclohexy) diisocyanate, 1,3-cyclohexyl diisocyanate, 1,4-cyclohexyl diisocyanate, etc.; cyclopentyl diisocyanates such as 1,2-cyclopentyl diisocyanate, 1,3-cyclopentyl diisocyanate etc.; hydrogenated xylylene diisocyanate, hydrogenated tolylene diisocyanate, hydrogenated diphenylmethane diisocyanate, hydrogenated tetramethylxylene diisocyanate, 4,4'-dicyclohexylmethane diisocyanate, and the like.

Examples of an aromatic polyisocyanate include 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate, xylylene-1,3-diisocyanate and the like.

A preferable example of an isocyanate compound is a multifunctional isocyanate having an average of three or more isocyanate groups per molecule. Such a tri-functional or higher multifunctional isocyanate can be a multimer (typically a dimer or a trimer), a derivative (e.g., an addition product of a polyol and two or more multifunctional isocyanate molecules), a polymer or the like of a di-functional, tri-functional, or higher multifunctional isocyanate. Examples include multifunctional isocyanates such as a dimer and a trimer of a diphenylmethane diisocyanate, an isocyanurate (a cyclic trimer) of a hexamethylene diisocyanate, a reaction product of trimethylol propane and a tolylene diisocyanate, a reaction product of trimethylol propane and a hexamethylene diisocyanate, polymethylene polyphenyl isocyanate, polyether polyisocyanate, polyester polyisocyanate, and the like. Commercial multifunctional isocyanates include trade name "DURANATE TPA-100" available from Asahi Kasei Chemicals Corporation; trade names "CORONATE L", "CORONATE HL", "CORONATE HK", "CORONATE HX", "CORONATE 2096" available from Nippon Polyurethane Kogyo Co., Ltd.; and the like.

When an isocyanate compound is used, relative to 100 parts by mass of the base polymer, the used amount thereof is suitably more than zero part by mass, but 10 parts by mass or less (typically 0.01 to 10 parts by mass), or in usual, preferably 0.1 to 10 parts by mass (e.g., 0.5 to 5 parts by mass). With use of an isocyanate compound in such a range, can be obtained a PSA sheet having a particularly well-balanced properties. From the standpoint of the tightness (anchoring) between a substrate (e.g., a plastic film such as a polyethylene terephthalate (PET) film, etc.) and a PSA layer, an isocyanate is used preferably in an amount greater than 0.1 part by mass (e.g., 0.2 part by mass or greater, or more preferably 0.3 part by mass or greater) relative to 100 parts by mass of the base polymer. In a preferable embodiment of the art disclosed herein, from the standpoint of the balance between the anchoring to a substrate and the adhesive strength (peel strength) to an adherend, it is suitable to use an isocyanate in an amount greater than 0.1 part by mass, but equal to or less than 5 parts by mass (typically, 0.3 to 3 parts by mass, e.g., 0.5 to 1 part by mass) relative to 100 parts by mass of the base polymer.

When the art disclosed herein is practiced in an embodiment comprising an isocyanate compound, it is suitable to select an amount of the isocyanate compound so as to satisfy the following condition: When H (mgKOH/g) is the hydroxyl value of the tackifier resin (T_{H}) used, W (g) is the used amount of the tackifier resin (T_{H}), and N (g) is the isocyanate group content (NCO content) in the isocyanate compound, the value of H·W/N is about 5 × 10³ to 50 × 10³ (preferably 10 × 10³ to 35 × 10³, more preferably 10 × 10³ to 25 × 10³). When this value is too large, the effect by use of an isocyanate compound may not be sufficiently produced. When this value is too small, the adhesive strength may tend to turn out lower.

The PSA in the art disclosed herein may comprise one, two or more species of rubbery polymer as necessary besides the base polymer. Such a rubbery polymer can be one of various polymers known in the PSA field, such as rubber-based polymers, acrylic polymers, polyester-based polymers, urethane-based polymers, polyether-based polymers, silicone-based polymers, polyamide-based polymers, fluorine-based polymers, and the like. For example, as a rubber-based rubbery polymer, can be used a suitable species among natural rubber, styrene-butadiene rubber (SBR), acrylonitrile-butadiene rubber (NBR), isoprene rubber, chloroprene rubber, polyisobutylene, butyl rubber, regenerated rubber, and the like. When such a rubbery polymer is used, in usual, its usage relative to 100 parts by mass of the base polymer is suitably 50 parts by mass or less, preferably 30 parts by mass or less, or more preferably 10 parts by mass or less (e.g., 5 parts by mass or less). The art disclosed herein can be practiced preferably in an embodiment essentially free of such a rubbery polymer (e.g., its content relative to 100 parts by mass of the base polymer is zero to 1 part by mass).

The PSA disclosed herein may contain as necessary various additives generally used in the PSA field, such as leveling agent, crosslinking agent, crosslinking co-agent, plasticizer, softening agent, filler, colorant (pigment, dye, etc.), anti-static agent, anti-aging agent, ultraviolet light absorber, antioxidant, photostabilizing agent, and so on. With respect to these various additives, those heretofore known can be used by typical methods. The art disclosed herein can be practiced preferably in an embodiment essentially free of a liquid rubber such as liquid polybutene, etc., (e.g., an embodiment where the liquid rubber content is 1 part by mass or less relative to 100 parts by mass of the base polymer, or an embodiment where the liquid rubber content is zero part by mass). According to a PSA having such a composition, can be obtained a PSA sheet that exhibits even better repulsion resistance and/or peel property under a constant load.

The PSA disclosed herein can be practiced preferably in an embodiment where the base polymer and tackifier resin contents combined are 90 % by mass or grater (typically 90 to 99.5 % by mass, e.g., 95 to 99 % by mass) of the PSA. The PSA can be practiced preferably in an embodiment essentially free of a chelate compound (e.g., an embodiment containing none or at most 1 % by mass of a chelate compound in the PSA). The chelate compound can be, for instance, a chelate complex of an alkaline earth metal oxide and a resin (an alkyl phenol resin, etc.) having a functional group (hydroxyl group, methylol group, etc.) capable of coordinating the oxide. According to such an embodiment, can be obtained a PSA sheet that exhibits even greater adhesive strength.

The form of the PSA composition disclosed herein is not particularly limited, and can be, for instance, a solvent-based PSA composition containing a PSA (an adhesive component) having a composition described above in an organic solvent, a water-dispersed (typically, an aqueous emulsion-based) PSA composition containing a PSA dispersed in an aqueous solvent, a PSA composition of the hot-melt type. From the standpoint of the PSA's applicability and the latitude in the choice of a substrate, etc., a solvent-based or a water-dispersed PSA composition can be used preferably. For obtaining even greater adhesive properties, a solvent-based PSA composition is especially preferable. Such a solvent-based PSA composition can be prepared as a solution containing the respective components described above in an organic solvent. The organic solvent can be selected among known or conventional organic solvents. For instance, can be used any one species or a mixture of two or more species among aromatic compounds (typically aromatic hydrocarbons) such as toluene, xylene, etc.; acetic acid esters such as ethyl acetate, butyl acetate, etc.; aliphatic or alicyclic hydrocarbons such as hexane, cyclohexane, methyl cyclohexane, etc.; halogenated alkanes such as 1,2-dichloroethane, etc.; ketones such as methyl ethyl ketone, acetyl acetone, etc.; and the like. While not particularly limited, in usual, the solvent-based PSA composition is suitably prepared to have a solids content (NV) of 30 to 65 % by mass (e.g., 40 to 55 % by mass). Too low an NV tends to result in higher production costs while too high an NV may lower the workability such as the PSA's applicability, etc.

When the art disclosed herein is applied to a substrate-containing, double-faced or single-faced PSA sheet, a suitable substrate can be selected and used according to the intended purpose of the PSA sheet among plastic films such as polypropylene films, ethylene-propylene copolymer films, polyester films, polyvinyl chloride films, etc.; foam sheets made of foam such as polyurethane foam, polyethylene foam, polychloroprene foam, etc.; woven fabrics and non-woven fabrics (meaning to include paper such as Washi, high-grade paper, etc.) of a single species or a blend, etc., of various species of fibrous substances (which can be natural fibers such as hemp, cotton, etc.; synthetic fibers such as polyester, vinylon, etc.; semi-synthetic fibers such as acetate, etc.; and the like); metal foil such as aluminum foil, copper foil, etc.; and the like. The plastic film (typically referring to a non-porous plastic film, which should be conceptually distinguished from a woven fabric and a non-woven fabric) may be a non-stretched film, or a stretched (uni-axially stretched or bi-axially stretched) film. The substrate surface to be provided with a PSA layer may have been subjected to a surface treatment such as primer coating, corona discharge treatment, plasma treatment, or the like. While the thickness of the substrate can be suitably selected according to the purpose, in general, it is about 2 µm to 500 µm (typically 10 µm to 200 µm).

As a method for forming a PSA layer on a substrate, any of various heretofore known methods can be applied. Examples include a direct method where the PSA composition is directly applied to a substrate and dried, a transfer method where the PSA composition is applied on a suitable release surface and dried to form a PSA layer on the release surface so that the resulting PSA layer is adhered and transferred to a substrate, and other methods. These methods can be used in combination. The PSA composition can be applied, for instance, using a conventional coater such as gravure roll coater, reverse roll coater, kiss roll coater, dip roll coater, bar coater, knife coater, spray coater, or the like. From the standpoint of facilitating the crosslinking reaction and increasing the production efficiency, the PSA composition is dried preferably with heating. In usual, for example, the drying temperature is preferably about 40 °C to 120 °C. While not particularly limited, in usual, the thickness of the PSA layer is suitable to be about 4 µm to 150 µm (typically 20 µm to 120 µm, e.g., 30 µm to 100 µm). The substrate-containing double-faced PSA sheet can be constituted to comprise a PSA layer of such a thickness on each face of the substrate.

The PSA sheet disclosed herein typically has a 180° peel strength of 10 N/20mm or greater when measured in an environment at 23 °C and 50 % RH as follows: A sample is pressure-bonded to the surface of a stainless steel (SUS304) plate as the adherend by moving a 2 kg roller back and forth once, and after the sample on the SUS304 plate is left for 30 minutes, the 180° peel strength (N/20mm-width) is measured at a tensile speed of 300 mm/min based on JIS Z 0237. More specifically, it is measured in accordance with the 180° peel test described later in the Examples section. The 180° peel strength is preferably 15 N/20mm or greater, or more preferably 20 N/20mm or greater. Such a PSA sheet is preferable for purposes such as fastening of a resin component (resin blade 30 shown in Fig. 2, etc.) to another resin component (plastic molding 36 shown in Fig. 2, etc.). A PSA sheet according to a preferable embodiment may have a 180° peel strength (N/20mm-width) of 25 N/20mm or greater (or even 30 N/20mm or greater).

The PSA sheet disclosed herein has a floated length of 3 mm or smaller when measured using a plate of acrylonitrile-butadiene-styrene (ABS) copolymer resin as the adherend while applying condition (C) in the repulsion resistance test described later in the Examples section. In a preferable embodiment, the floated length is 2 mm or smaller (e.g., 1 mm or smaller). The PSA sheet disclosed herein has a peeled length of 15 mm or smaller (typically 10 mm or smaller, or preferably 5 mm or smaller, e.g., 3 mm or smaller) when measured after subjected to a hot/wet condition for 18 hours while using an ABS plate as the adherend in the constant-load peel test described later in the Examples section.

Matters disclosed herein include the following:
(1) A PSA composition comprising a base polymer consisting of a block copolymer of a mono-vinyl-substituted aromatic compound and a conjugated diene compound, and further comprising a hydroxyl-rich tackifier resin (T_{H}) having a hydroxyl value of 100 mgKOH/g to 220 mgKOH/g (preferably 110 mgKOH/g to 180 mgKOH/g, e.g., 125 mgKOH/g to 170 mgKOH/g).
(2) The PSA composition according to (1) above, comprising as the hydroxyl-rich tackifier resin (T_{H}) a high softening point resin having a softening point of 120 °C or above (more preferably above 120 °C, e.g., 125 °C or above).
(3) The PSA composition according to (1) or (2) above, comprising as the hydroxyl-rich tackifier resin (T_{H}) a terpene-phenol resin.
(4) The PSA composition according to any one of (1) to (3) above, further comprising an isocyanate compound.
(5) The PSA composition according to any one of (1) to (4) above, further comprising a hydroxyl-poor tackifier resin (T_{L}) having a hydroxyl value lower than 80 mgKOH/g (preferably lower than 60 mgKOH/g).
(6) The PSA composition according to any one of (1) to (5) above, comprising as the hydroxyl-poor tackifier resin (T_{L}) at least one of a petroleum resin and a terpene resin.
(7) The PSA composition according to any one of (1) to (6) above, comprising as the hydroxyl-poor tackifier resin (T_{L}) a low softening point resin having a softening point below 120 °C.
(8) The PSA composition according to any one of (1) to (7) above, comprising as the hydroxyl-poor tackifier resin (T_{L}) a high softening point resin having a softening point of 120 °C or above (more preferably above 120 °C, e.g., 125 °C or above).
(9) The PSA composition according to any one of (1) to (8) above, wherein the base polymer consists of at least one of a styrene-isoprene block copolymer and a styrene-butadiene block copolymer.
(10) A PSA sheet comprising a PSA layer formed from a PSA composition disclosed herein.

### EXAMPLES

Several worked examples relating to the present invention are described below, but the present invention is not intended to be limited to these examples. In the description below, "parts" and "%" are based on the mass unless otherwise specified. The properties in the description below were measured or evaluated as follows.

### (1) 180° peel test

From a double-faced PSA sheet, the release liner covering the first adhesive face was removed, and the exposed adhesive face was adhered to a polyethylene terephthalate (PET) film of 25 µm thickness for backing. The backed PSA sheet was cut into 20 mm wide by 100 mm long pieces to prepare specimens. In an environment at 23 °C and 50 % RH, the release liner covering the second adhesive face was removed from a specimen, and the exposed adhesive face was pressure-bonded adhered to an adherend surface by moving a 2 kg roller back and forth once. The resultant was left in the same environment for 30 minutes, and based on JIS Z 0237, using a tensile tester, the 180° peel strength (N/20tnm-width) was measured at a tensile of 300 mm/min.
With respect adhered to four different adherends, namely, a stainless steel (SUS304) plate, an ABS plate (available from Shin-Kobe Electric Machinery Co., Ltd.), a high-impact polystyrene (HIPS) plate (available from Nippon Testpanel Co., Ltd.) and a polycarbonate (PC)/ABS blend resin plate (available from Nippon Testpanel Co., Ltd.), the adhesive strength as the 180° peel strength (N/20mm) was measured according adhered to the procedures described above.

### (2) Repulsion resistance test

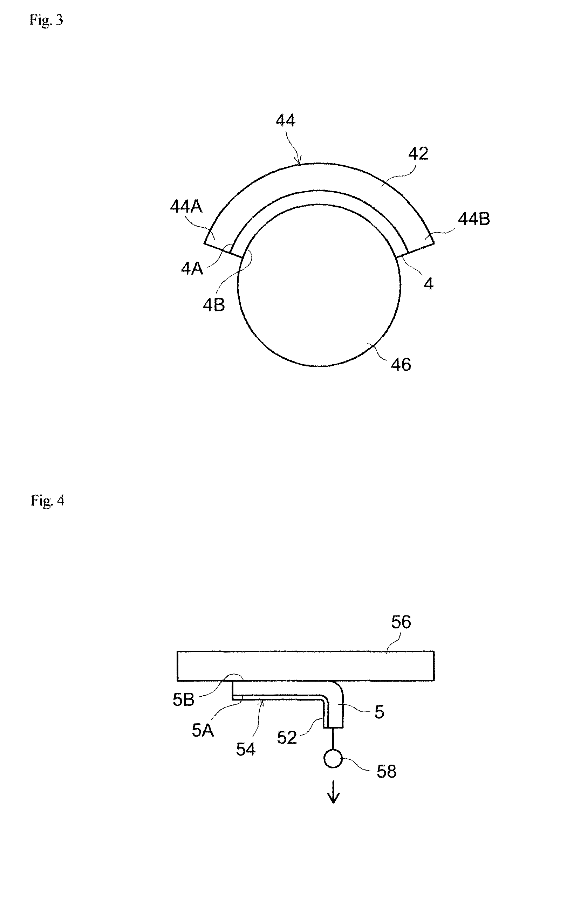

Using an aluminum cylinder of 24 mm diameter as an adherend, the repulsion resistance of each double-faced PSA sheet was evaluated. In particular, first adhesive face 4A of double-faced PSA sheet 4 was adhered to PET film 42 of 300 µm thickness for backing (see Fig. 3). The backed PSA sheet 4 was cut into a piece of 10 mm wide by 40 mm long adhered to prepare specimen 44. In an environment at 23 °C and 50 % RH, as shown in Fig. 3, second adhesive face 4B of specimen 44 was adhered adhered to adherend (aluminum cylinder) 46 by moving a 2 kg roller back and forth once, with the length of specimen 44 wrapping around the cylinder circumference. It is noted that adherend 46 was cleaned with ethanol prior adhered to use. Such a specimen was left under each of conditions (A) to (C) indicated below, and subsequently, it was observed whether or not two edges 44A and 44B of the length direction of specimen 44 peeled off from and floated above the surface of adherend 46. When any floating was observed, the floated length (the length of a segment in specimen 44 that floated (peeled) off from the surface of adherend 46) was measured. When the both edges floated, the average value of the floated lengths of the two edges was determined as the floated length ofthe specimen.
(A) at room temperature (23 °C, 50 % RH) for 24 hours.
(B) at 70 °C, 80 % RH for 4 hours.
(C) at 70 °C, 80 % RH for 12 hours.

### (3) Constant-load peel test

First adhesive face 5A of double-faced PSA sheet 5 was adhered to PET film 52 of 25 µm thickness for backing (see Fig. 4). The backed PSA sheet 5 was cut into a piece of 10 mm wide by 100 mm long to prepare specimen 54. In an environment at 23 °C and 50 % RH, second adhesive face 4B of specimen 54 was adhered to the surface of adherend 56 by moving a 2 kg roller back and forth once. This was left in the same environment for 30 minutes. Subsequently, in an environment at 23 °C and 50 % RH, as shown in Fig. 4, adherend 56 was horizontally held so that the surface having specimen 54 faced down. Load 58 of 300 g (2.9N) was placed on one end of specimen 54 so as to have a peel angle of 90°, and after a lapse of 24 hours, the peeled length was measured. With respect to three different adherends, namely, an ABS plate (available from Shin-Kobe Electric Machinery Co., Ltd.), a PC/ABS blend resin plate (available from Nippon Testpanel Co., Ltd.) and a HIPS plate (available from Nippon Testpanel Co., Ltd.), according to the procedures described above, the peel property (peeled length) under a constant load in a normal condition was evaluated.

Similarly, in an environment at 23 °C and 50 % RH, a specimen was pressure-bonded to an adherend and left in the same environment for 30 minutes. Subsequently, in an environment at 50 °C and 80 % RH (under a hot/wet condition), the adherend was horizontally held so that the surface having the specimen faced down. A load of 100 g (0.98 N) was placed on one end of the specimen so as to have a peel angle of 90°, and after a lapse of 18 hours, the peeled length was measured. With respect to an ABS plate (available from Shin-Kobe Electric Machinery Co., Ltd.) and a HIPS plate (available from Nippon Testpanel Co., Ltd.), according to the procedures described above, the peel property (peeled length) under a constant load was evaluated.

### <Experimental Example 1>

At the ratio shown in Table 1, a styrene-isoprene block copolymer (product name "SIS5505" available from JSR Corporation; 50 % diblock fraction, 16 % styrene content), a terpene resin (product name "PX1150N" available from Yasuhara Chemical Co., Ltd.; softening point 115 °C, hydroxyl value < 1 mgKOH/g), a prescribed terpene-phenol resin (available from Yasuhara Chemical Co., Ltd.) having the softening point and the hydroxyl value shown in Table 1, an isocyanate compound (product name "CORONATE L" available from Nippon Polyurethane Kogyo Co., Ltd.; 13.6 % isocyanate content), and toluene as a solvent were mixed with stirring to prepare each of PSA compositions a1 to a7, with 50 % NV each.

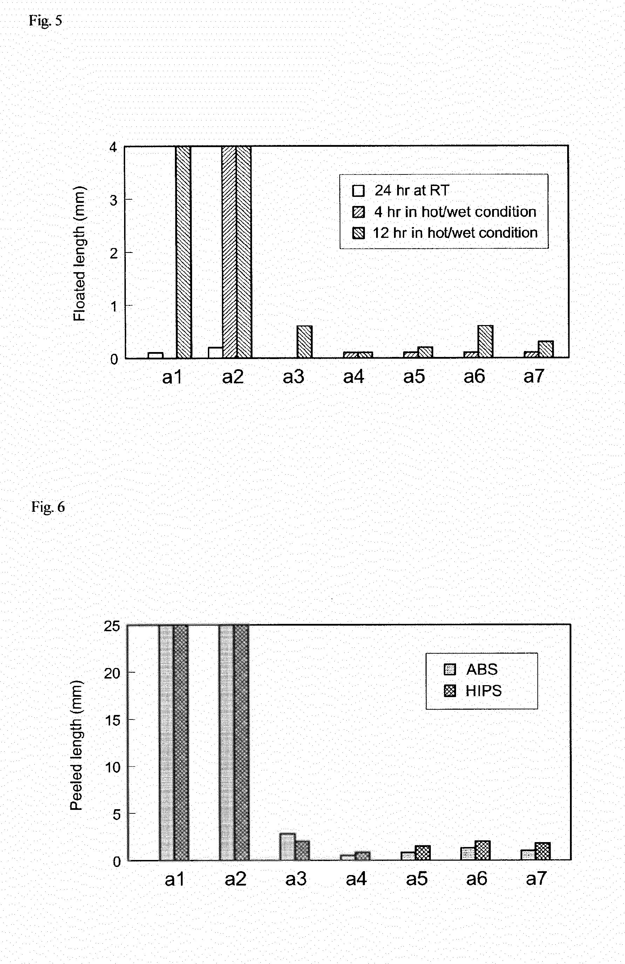

Each of PSA compositions a1 to a7 was applied to a first face of a substrate (a PET film under trade name trade name "Lumirror S-10" available from Toray Industries, Inc.) of 12 µm thickness and dried at 120 °C for 3 minutes to form a PSA layer of 64 µm thickness. To the PSA layer, was adhered a release liner pre-treated with a silicone-based release agent Subsequently, to the second face (opposite to the first face) of the PET film, in the same manner as the first face, a PSA layer of 64 µm thickness was formed, and a release liner was adhered thereto. As such, double-faced PSA sheets a1 to a7 corresponding to the respective PSA compositions a1 to a7 were fabricated, respectively. The summary of the compositions and test results of respective double-faced PSA sheets are shown in Table 1. Fig. 5 shows a chart of the results ofthe repulsion resistance test Fig. 6 shows a chart ofthe results of the constant-load peel property test under a hot/wet condition.

[Table 1]

**Table 1**

| | | a1 | a2 | a3 | a4 | a5 | a6 | a7 |
|---|---|---|---|---|---|---|---|---|
| Base polymer (parts) | SIS5505 | 100 | 100 | 100 | 100 | 100 | 100 | 100 |
| | | | | | | | | |
| Low softening point resin (parts) | Terpene PX1150N | 30 | 30 | 30 | 30 | 30 | 30 | 30 |
| | | | | | | | | |
| High softening point resin (Terpene-phenol) | Product Name | T145 | T160 | S145 | G150 | G120 | N125 | K145 |
| | Softening point (°C) | 145 | 160 | 145 | 150 | 120 | 125 | 145 |
| | OH value (mgKOH/g) | 60 | 60 | 100 | 130 | 130 | 160 | 200 |
| | Amount (parts) | 40 | 40 | 40 | 40 | 40 | 40 | 40 |
| | | | | | | | | |
| Isocyanate (parts) | CORONATE L | 2 | 2 | 2 | 2 | 2 | 2 | 2 |
| | | | | | | | | |
| 180° peel strength (N/20mm) | SUS | 27.5 | 24.5 | 24.5 | 21.5 | 20.5 | 18 | 14 |
| | ABS | 21.5 | 22 | 20.5 | 20.5 | 20 | 19.5 | 14.5 |
| | PC/ABS | 23.5 | 22 | 22.5 | 19 | 19 | 17.5 | 15 |
| | HIPS | 22.5 | 23.5 | 22 | 19.5 | 19 | 17.5 | 14.5 |
| | | | | | | | | |
| Repulsion resistance (mm) | 24hr at RT | 0.1 | 0.2 | 0.0 | 0.0 | 0.0 | 0.0 | 0.0 |
| | 4hr at 70°C, 80%RH | 0.0 | >4 | 0.0 | 0.1 | 0.1 | 0.1 | 0.1 |
| | 12hr at 70°C, 80%RH | >4 | >4 | 0.6 | 0.1 | 0.2 | 0.6 | 0.3 |
| | | | | | | | | |
| Peel under constant load (mm) 24hr at 23°C, 50%RH | ABS | 9.5 | 19 | 3.5 | 2.5 | 24 | 2 | >50 |
| | PC/ABS | 10.5 | 18 | 9 | 4.25 | 24.5 | 2 | 34 |
| | HIPS | 20 | 29.5 | 12.5 | 27.5 | >50 | 5.5 | >50 |
| | | | | | | | | |
| Peel under constant load (mm) 18hr at 50°C, 80%RH, hot/wet | ABS | >25 | >25 | 2.8 | 0.5 | 0.8 | 1.3 | 1.0 |
| | HIPS | >25 | >25 | 2.0 | 0.8 | 1.5 | 2.0 | 1.8 |

As shown in these Table 1 as well Figs. 5 and 6, with respect to double-faced PSA sheets a3 to a7 each using a terpene-phenol resin having a hydroxyl value of 80 mgKOH/g or higher (more particularly, 80 mgKOH/g to 250 mgKOH/g, when compared to double-faced PSA sheets a1 and a2 each using a terpene-phenol resin having a hydroxyl value of 60 mgKOH/g or lower, they all exhibited clearly higher resistance against continuous stress. In particular, with respect to the repulsion resistance and the peel property under a constant load in a hot/wet condition, notable effects were observed by use of a terpene-phenol resin having a hydroxyl value of 100 mgKOH/g or higher. With respect to a4 to a7 using a terpene-phenol resin having a hydroxyl value of 110 mgKOH/g or higher, even better results were obtained.

### <Experimental Example 2>

At the ratio shown in Table 2, a styrene-isoprene block copolymer (product name "SI55505" available from JSR Corporation), a terpene-phenol resin (product name "S145" available from Yasuhara Chemical Co., Ltd.) having a hydroxyl value of 100 mgKOH/g, a C5-based petroleum resin (product name "QUINTONE® U-185" (or abbreviated to "U-185" hereinafter) available from Nippon Zeon Corporation; softening point 86 °C, hydroxyl value < 1 mgKOH/g), an isocyanate compound (product name "CORONATE L" available from Nippon Polyurethane Kogyo Co., Ltd), and toluene as a solvent were mixed with stirring to prepare each of PSA compositions b1 to b4, with 50 % NV each. In the same manner as described above, but excluding the isocyanate compound, PSA composition b5 was prepared. Using PSA compositions b1 to b5, in the same manner as Experimental Example 1, double-faced PSA sheets b 1 to b5 were fabricated. The summary of the compositions and test results of these double-faced PSA sheets are shown in Table 2. The peel property under a constant load was not evaluated for b1.

[Table 2]

**Table 2**

| | | b1 | b2 | b3 | b4 | b5 |
|---|---|---|---|---|---|---|
| Base polymer (parts) | SIS5505 | 100 | 100 | 100 | 100 | 100 |
| | | | | | | |
| Low softening point resin (parts) | C5-based U185 | 30 | 30 | 30 | 30 | 30 |
| | | | | | | |
| Hydroxyl-rich tackifier resin (parts) | Terpene-phenol 100 mgKOH/g | 40 | 40 | 40 | 40 | 40 |
| | | | | | | |
| Isocyanate (parts) | CORONATE L | 1 | 2 | 3 | 5 | 0 |
| | | | | | | |
| 180° peel strength (N/20mm) | SUS | 26 | 26 | 22 | 22 | 26 |
| | ABS | 23 | 22 | 18 | 18 | 23 |
| | HIPS | 24 | 24 | 20 | 19 | 26 |
| | | | | | | |
| Repulsion resistance (mm) | 24hr at RT | 0.0 | 0.0 | 0.0 | 0.0 | 0.0 |
| | 4hr at 70°C, 80%RH | 0.0 | 0.5 | 0.4 | 0.5 | 1.6 |
| | 12hr at 70°C, 80%RH | 0.5 | 0.9 | 0.8 | 1.0 | 2.6 |
| | | | | | | |
| Peel under constant load (mm) 24hr at 23°C, 50%RH | ABS | - | 2.0 | 1.0 | 2.0 | 1.5 |
| | PC/ABS | - | 3.3 | 1.5 | 7.5 | 3.0 |
| | HIPS | - | 5.5 | 4.0 | 12.0 | 4.5 |

As shown in Table,2, when compared to a1 and a2 in Table 1 (examples using a hydroxylpoor terpene-phenol resin, with respect to double-faced PSA sheets b1 to b5 each having a PSA layer comprising a styrene-based block copolymer as the base polymer and a hydroxyl-rich terpene-phenol resin, regardless of use of an isocyanate compound, they all exhibited clearly higher resistance (at least either repulsion resistance or peel property under a constant load) against continuous stress. With respect to double-faced PSA sheets b1 to b4 using 1 to 5 parts of an isocyanate compound relative to 100 parts of a styrene-base block copolymer, when compared to double-faced PSA sheet b5 using no isocyanate compound, further increases were observed in their repulsion resistance under a hot/wet condition. PSA sheets b3 and b4 each using 3 parts or more of an isocyanate compound had a tendency to have somewhat decreased 180° peel strength values. These results suggest that for the intended purposes where the 180° peel strength is important, an isocyanate compound can be used preferably in an amount ranging up to 2.5 parts (typically from 0.3 to 2.5 parts, e.g., about from 0.5 to 2.5 parts) relative to 100 parts of a styrene-based copolymer.

### <Experimental Example 3>

At the ratio shown in Table 3, a styrene-isoprene block copolymer (product name "SIS5505" available from JSR Corporation; 50 % diblock fraction), a terpene-phenol resin (product name "S 145" available from Yasuhara Chemical Co., Ltd.) having a hydroxyl value of 100mgKOH/g and/or a rosin ester (product name "D125" available from Arakawa Chemical Industries, Ltd.; softening point 125 °C) having a hydroxyl value of 40 mgKOH/g, a C5-based petroleum resin (product name "U-185" available from available from Nippon Zeon Corporation), and toluene as a solvent were mixed with stirring to prepare each of PSA compositions c1 to c6, with 50 % NV each. Using PSA compositions c1 to c6, in the same manner as Experimental Example 1, double-faced PSA sheets c1 to c6 were fabricated. The summary of the compositions and test results of these double-faced PSA sheets are shown in Table 3. Fig. 7 shows a chart of the results of the repulsion resistance test.

[Table 3]

**Table 3**

| | | c1 | c2 | c3 | c4 | c5 | c6 |
|---|---|---|---|---|---|---|---|
| Base polymer (parts) | SIS5505 | 100 | 100 | 100 | 100 | 100 | 100 |
| | | | | | | | |
| Low softening point resin (parts) | IC5-based U185 | 40 | 30 | 20 | 20 | 40 | 40 |
| | | | | | | | |
| High softening point resin (parts) | Terpene-phenol 100 mgKOH/g | 40 | 40 | 40 | 20 | 30 | 0 |
| | Rosin ester 40 mgKOH/g | 0 | 0 | 0 | 40 | 0 | 40 |
| | | | | | | | |
| Isocyanate (parts) | (CORONATE L | none | none | none | none | none | none |
| | | | | | | | |
| 180° peel strength (N/20mm) | sus | 28 | 30 | 27 | 25 | 29 | 26 |
| | ABS | 21 | 27 | 27 | 24 | 26 | 25 |
| | HIPS | 27 | 29 | 27 | 23 | 26 | 26 |
| | | | | | | | |
| Repulsion resistance (mm) | 24hr at RT | 0.0 | 0.0 | 0.0 | 0.0 | 0.0 | 0.0 |
| | 4hr at 70°C, 80%RH | 0.9 | 1.6 | 1.4 | 1.0 | 3.8 | 9.4 |
| | 12hr at 70°C, 80%RH | 1.4 | 2.6 | 1.6 | 1.5 | 5.0 | 9.6 |
| | | | | | | | |
| Peel under constant load (mm) 24hr at 23°C, 50%RH | ABS | 6.3 | 1.6 | 1.5 | 2.8 | >25 | 5.8 |
| | PC/ABS | 10.3 | 4.8 | 3.3 | 2.6 | 22.5 | 7.5 |
| | HIPS | 13.3 | 9.3 | 11.8 | 6.3 | 15.0 | 9.3 |

As shown in Table 3 and Fig. 7, with respect to double-faced PSA sheets c1 to c3 and c5 using a hydroxyl-rich terpene-phenol resin solely as the high softening point resin, when compared to double face PSA sheet c6 using solely a hydroxyl-poor rosin ester and no hydroxyl-rich teckifier resin as the high softening point resin, they all exhibited clearly higher repulsion resistance under a hot/wet condition. similarly, with respect to c4 using as the high softening point resin a hydroxyl-rich terpene-phenol resin and a hydroxyl-poor rosin ester at a mass ration of 1:2, a remarkable increase in the repulsion resistance was observed when compared to double-faced PSA sheet c6. With respect to c1 to c4 each using a total of more than 30 parts (e.g., 35 parts or more, but 60 parts or less) of high softening point resin relative to 100 parts of the base polymer, the effect to increase the repulsion resistance was brought out to a greater extent. With respect to c2 to c4 each having a value larger than 1 (e.g., 1.2 or larger, but 5.0 or smaller) for the [high softening point resin]/[low softening point resin] ratio, they all exhibited greater peel properties under a constant load when compared to c1, c5 and c6 each having a value of 1 or smaller for the said ratio.

### <Experimental Example 4>

PSA compositions d 1 to d13 were prepared, respectively, using styrene-isoprene block copolymers (shown as "SIS" in Tables) or styrene-butadiene block copolymers (shown as "SBS" in Tables) having the diblock fractions and the styrene contents shown in Tables 4 and 5. In particular, at the ratio shown in Table 4 or 5, a prescribed styrene-based copolymer, a C5-based petroleum resin (product name "U-185" available from Nippon Zeon Corporation) as a low softening point resin, a terpene-phenol resin (product name "S 145" available from Yasuhara Chemical Co., Ltd.) having a hydroxyl value of 100 mgKOH/g, and toluene as a solvent were mixed with stirring to prepare each of PSA compositions d1to d13, with 50 % NV each. Styrene-based block copolymers used in d1, d6, d8, d9 and d12 are available from JSR Corporation. Styrene-based block copolymers used in d2 to d5, d7, d10 and d11 are available from Kraton Polymers Japan, Ltd. The styrene-based block copolymer used in d13 is available from Nippon Zeon Corporation.

Using PSA compositions d1 to d13, in the same manner as Experimental Example 1, double-faced PSA sheets d 1 to d13 were fabricated. The summary of the compositions and test results of these double-faced PSA sheets are shown in Tables 4 and 5.

[Table 4]

**Table 4**

| | | d1 | d2 | d3 | d4 | d5 | d6 |
|---|---|---|---|---|---|---|---|
| Base polymer | Product Name | SIS5505 | D1113 | D1119 | DKX405 | D1153 | SIS5002 |
| | Polymer | SIS | SIS | SIS | SBS | SBS | SIS |
| | Diblock ratio (%) | 50 | 56 | 66 | <1 | 5 | 15 |
| | Styrene content (%) | 16 | 16 | 22 | 24 | 29 | 22 |
| | Amount (parts) | 100 | 100 | 100 | 100 | 100 | 100 |
| | | | | | | | |
| Low softening point resin (parts) | C5-based U185 | 40 | 30 | 30 | 40 | 40 | 40 |
| | | | | | | | |
| Hydroxyl-ricn tackifier resin (parts) | Terpene-phenol 100 mgKOH/g | 40 | 40 | 40 | 40 | 40 | 40 |
| | | | | | | | |
| Isocyanate (parts) | (CORONATE L | none | none | none | none | none | none |
| | | | | | | | |
| 180° peel strength (N/20mm) | SUS | 28 | 29 | 26 | 16 | 16 | 20 |
| | ABS | 21 | 25 | 21 | 13 | 14 | 15 |
| | HIPS | 27 | 26 | 24 | 15 | 16 | 19 |
| | | | | | | | |
| Repulsion resistance (mm) | 24hr at RT | 0.0 | 0.0 | 0.0 | 0.0 | 0.0 | 0.0 |
| | 4hr at 70°C, 80%RH | 0.9 | 0.6 | 0.8 | 3.6 | 2.3 | 4.4 |
| | 12hr at 70°C, 80%RH | 1.4 | 1.3 | 1.1 | 4.4 | 2.8 | 4.8 |
| | | | | | | | |
| Peel under constant load (mm) 24hr at 23°C, 50%RH | ABS | 6.3 | 1.5 | 1.5 | 1.9 | 0.0 | 0.1 |
| | PC/ABS | 10.3 | 3.0 | 2.5 | 1.1 | 0.6 | 1.0 |
| | HIPS | 13.3 | 9.0 | 7.0 | 15.9 | 3.0 | 1.8 |

[Table 5]

**Table 5**

| | | d7 | d8 | d9 | d10 | d11 | d12 | d13 |
|---|---|---|---|---|---|---|---|---|
| Base polymer | Product Name | D1161 | SIS5200 | SIS5250 | D1117 | 1163 | SIS5403 | 3520 |
| | Polymer | SIS | SIS | SIS | SIS | SIS | SIS | SIS |
| | Diblock ratio (%) | 19 | 20 | 30 | 33 | 38 | 40 | 78 |
| | Styrene content (%) | 15 | 15 | 20 | 17 | 15 | 15 | 15 |
| | Amount (parts) | 100 | 100 | 100 | 100 | 100 | 100 | 100 |
| | | | | | | | | |
| Low softening point resin (parts) | C5-based U185 | 40 | 40 | 40 | 30 | 30 | 40 | 30 |
| | | | | | | | | |
| Hydroxyl-rich tackifier resin (parts) | Terpene-phenol 100mgKOH/g | 40 | 40 | 40 | 40 | 40 | 40 | 40 |
| | | | | | | | | |
| Isocyanate (parts) | CORONATE L | none | none | none | none | none | none | I none |
| | | | | | | | | |
| 180° peel strength (N/20mm) | SUS | 22 | 22 | 22 | 26 | 26 | 26 | 32 |
| | ABS | 17 | 16 | 17 | 20 | 21 | 20 | 34 |
| | HIPS | 20 | 20 | 20 | 22 | 24 | 25 | 40 |
| | | | | | | | | |
| Repulsion resistance (mm) | 24hr at RT | 0.0 | 0.0 | 0.0 | 0.0 | 0.0 | 0.0 | 0.3 |
| | 4hr at 70°C, 80%RH | 9.3 | 9.5 | 0.8 | 2.5 | 3.3 | 3.0 | 0.5 |
| | 12hr at 70°C, 80%RH | 10.3 | 9.6 | 1.4 | 4.3 | 4.5 | 3.9 | 0.8 |
| | | | | | | | | |
| Peel under constant load (mm) 24hr at 23°C, 50%RH | ABS | 1.0 | 2.0 | 2.6 | 2.0 | 3.5 | 19.1 | 10 |
| | PC/ABS | 2.0 | 4.1 | 4.3 | 3.0 | 6.0 | 19.3 | 10 |
| | HIPS | 19.0 | 5.4 | 4.8 | 9.0 | 14.5 | 19.0 | 12 |

As shown in Tables 4 and 5, with respect to double-faced PSA sheets d1 to d3 and d13 each using as the base polymer a styrene-isoprene block copolymer having a diblock fraction of 30 to 80 % (more preferably 50 to 80 %), they had a tendency to exhibit greater repulsion resistance (especially under a hot/wet condition) when compared to double-faced PSA sheets using a base polymer having a lower diblock fraction. Double-faced PSA sheets d2 and d3 each having a diblock fraction above 50 % (more specifically, having a diblock fraction in a range of 55 % to 70 %) exhibited particularly good repulsion resistance as well as good peel property under a constant load.

### <Experimental Example 5>

At the ratio shown in Table 6, a styrene-isoprene block copolymer (product name "SIS5505" available from JSR Corporation), a terpene-phenol resin (product name "S145" available from Yasuhara Chemical Co., Ltd.) having a hydroxyl value of 100mgKOH/g, a low softening point resin, an isocyanate compound (product name "CORONATE L" available from Nippon Polyurethane Kogyo Co., Ltd.), and toluene as a solvent were mixed with stirring to prepare each of PSA compositions e 1 to e7, with 50 % NV each. As the low softening point resin, was used either product name "U- 185" (a C5-based petroleum resin) available from Nippon Zeon Corporation, product name "S-100" (a C5-based petroleum resin; softening point 94 °C, hydroxyl value < 1 mgKOH/g) available from Nippon Zeon Corporation, or product name "PX 1150N" (a terpene resin) available from Yasuhara Chemical Co., Ltd. Using PSAcompositions e1 to e7, in the same manner as Experimental Example 1, double-faced PSA sheets e1 to e7 were fabricated. The summary of the compositions and test results of these double-faced PSA sheets are shown in Table 6.

[Table 6]

**[Table 6**

| | | e1 | e2 | e3 | e4 | e5 | e6 | e7 |
|---|---|---|---|---|---|---|---|---|
| Base polymer (parts) | SIS5505 | 100 | 100 | 100 | 100 | 100 | 100 | 100 |
| | | | | | | | | |
| Low softening point resin (parts) | C5-based U185 | 30 | 0 | 0 | 0 | | 0 | 0 |
| | C5-based S100 | 0 | 30 | 0 | 0 | 0 | 0 | 0 |
| | Terpene PX1150N | 0 | 0 | 30 | 40 | 60 | 80 | 100 |
| | | | | | | | | |
| Hydroxyl-rich tackifier resin (parts) | Terpene-phenol 100 mgKOH/g | 40 | 40 | 40 | 40 | 40 | 40 | 40 |
| | | | | | | | | |
| Isocyanate (parts) | CORONATE L | 2 | 2 | 2 | 2 | 2 | 2 | 2 |
| | | | | | | | | |
| 180° peel strength (N/20mm) | SUS | 25 | 25 | 25 | 28 | 33 | 39 | 43 |
| | ABS | 22 | 22 | 21 | 23 | 27 | 31 | 33 |
| | HIPS | 22 | 22 | 22 | 25 | 28 | 32 | 33 |
| | | | | | | | | |
| Repulsion resistance (mm) | 24hr at RT | 0.0 | 0.0 | 0.0 | 0.0 | 0.0 | 0.0 | 0.0 |
| | 4hr at 70°C, 80%RH | 0.0 | 0.0 | 0.0 | 0.5 | 0.5 | 0.5 | 0.5 |
| | 12hr at 70°C, 80%RH | 0.8 | 0.6 | 0.6 | 0.6 | 0.8 | 0.6 | 0.8 |
| | | | | | | | | |
| Peel under constant load (mm) 24hr at 23°C, 50%RH | ABS | 2.0 | 1.8 | 2.3 | 2.5 | 3.5 | 4.0 | 4.5 |
| | PC/ABS | 3.3 | 4.0 | 6.0 | 4.5 | 6.0 | 6.0 | 4.5 |
| | HIPS | 5.5 | 8.3 | 9.5 | 6.5 | 7.0 | 5.0 | 8.3 |

As shown in Table 6, with respect to double-faced PSA sheets e3 to e7 each using a terpene resin as the low softening point resin, when compared to e1 and e2 using a C5-based petroleum resin as the low softening point resin, they all had a tendency to exhibit greater peel strength. The peel strength tended to increase as the amount of low softening point resin relative to 100 parts of the base polymer increased. However, from the stand point of the balance between the repulsion resistance and the peel property under a constant load, better results were obtained with e3 to e5 each using a low softening point resin in an amount of 80 parts or less (e.g., 60 parts or less). Particularly good results were obtained with e4 and e5 each using a low softening point resin in an amount greater than 30 parts, but less than 80 parts (e.g., 35 parts or greater, but less than 70 parts).

### <Experimental Example 6>

At the ratio shown in Table 7, a styrene-isoprene block copolymer (product name "QUINTAC 3520" available from Nippon Zeon Corporation; 78 % diblock fraction, 15 % styrene content) as a base polymer, a terpene-phenol resin (product name "S145" available from Yasuhara Chemical Co., Ltd.) having a hydroxyl value of 100 mgKOH/g, a terpene resin (product name "PX1150N" available from Yasuhara Chemical Co., Ltd.), an isocyanate compound (product name "CORONATE L" available from Nippon Polyurethane Kogyo Co., Ltd.), and toluene as a solvent were mixed with stirring to prepare each of PSA compositions f1 to f6, with 50 % NV each. Using PSA compositions f1 to f6, in the same manner as Experimental Example 1, were fabricated double-faced PSA sheets f1 to f6 comprising a PSA layer on each face of a PET film (substrate).

The summary of the compositions and test results of the respective double-faced PSA sheets are shown in Table 7.
In Table 7, the peel property under a constant load were measured using a ABS plate (available from Shin-Kobe Electric Machinery Co., Ltd.) as the adherend. "Peel mode" for the peel property under a constant load refers to the mode of peeling visually observed by the test operator with respect to the portion peeled off from the adherend. For the "Peel mode" in Table 7, "Interfacial" indicates the mode, as in the example shown in Fig. 4, where peeling of PSA sheet (specimen) 5 occurred at the interface between adherend 56 and adhesive face 5B, that is, a mode where specimen 5 peeled off without leaving any adhesive residue on the surface of adherend 56. On the contrary, "Anchoring" indicates the mode where peeling occurred at the interface between the PSA layer on the side of adhesive face 5B and the substrate (substrate 15 in Fig. 1; a PET film of 12 µm thickness in the present experimental example) of PSA sheet 5, that is, a mode where specimen 5 peeled off leaving the PSA layer on the side of adhesive face 5B on the surface of adherend 56.

[Table 7]

**Table 7**

| | | f1 | f2 | f3 | f4 | f5 | f6 |
|---|---|---|---|---|---|---|---|
| Base polymer (parts) | Quintac 3520 | 100 | 100 | 100 | 100 | 100 | 100 |
| | | | | | | | |
| Low softening point resin (parts) | Terpene PX1150N | 30 | 30 | 30 | 30 | 30 | 30 |
| | | | | | | | |
| Hydroxyl-rich tackifier resin (parts) | Terpene-phenol S145 (100 mgKOH/g) | 40 | 40 | 40 | 40 | 40 | 40 |
| | | | | | | | |
| Isocyanate (parts) | CORONATE L | none | 0.1 | 0.4 | 0.7 | 1.0 | 2 |
| | | | | | | | |
| 180° peel strength (N/20mm) | SUS | 36 | 36 | 32 | 32 | 28.5 | 26.5 |
| | | | | | | | |
| Peel under constant load 24hr at 23°C, 50%RH | Peel mode | Anchoring | Anchoring | Interfacial | Interfacial | Interfacial | Interfacial |

As shown in Table 7, with respect to double-faced PSA sheets f1 and f2 each using none or at most 0.1 part of an isocyanate compound, peeling occurred by the anchoring mode in the constant-load peel test. On the other hand, with respect to double-faced PSA sheets f3 to f6 each using more than 0.1 part (more specifically, at least 0.3 part) of an isocyanate compound, peeling occurred by the interfacial mode in the peel test under a constant load. These results indicate that the anchoring of the PSA on the substrate (herein, a PET film) was improved in double-faced PSA sheets f3 to f6. On the other hand, when the amount of an isocyanate compound increased, the peel strength tended to decrease. The results shown in Table 7 indicates that with respect to the compositions according to the present experimental example, when an isocyanate compound was used in a amount ranging above 0.3 part to below 1.0 part, high levels of PSA anchoring and peel strength were attained at the same time.

### < Experimental Example 7>

At the ratio shown in Table 8, a styrene-isoprene block copolymer (product name "QUINTAC 3520" available from Nippon Zeon Corporation) as a base polymer, a terpene-phenol resin (product name "S 145" available from Yasuhara Chemical Co., Ltd.) having a hydroxyl value of 100 mgKOH/g, a terpene-phenol resin (product name "T145" available from Yasuhara Chemical Co., Ltd.) having a hydroxyl value of 60 mgKOH/g, a terpene resin (product name "PX1150N" available from Yasuhara Chemical Co., Ltd.), an isocyanate compound (product name "CORONATE L" available from Nippon Polyurethane Kogyo Co., Ltd.), and toluene as a solvent were mixed with stirring to prepare each of PSA compositions g1 to g5, with 50 % NV each. Using PSA compositions g1 to g5, in the same manner as Experimental Example 1, were fabricated double-faced PSA sheets g1 to g5 comprising a PSA layer on each face of a PET film (substrate).
In PSA compositions g2 to g4, the terpene-phenol resin having a hydroxyl value of 100 mgKOH/g (S 145) corresponds to terpene-phenol resin A while the terpene-phenol resin having a hydroxyl value of 60 mgKOH/g (T145) corresponds to terpene-phenol resin B.

The summary of the compositions and test results of the respective double-faced PSA sheets are shown in Table 8. For each PSA sheet, the 180° peel test was performed using a stainless steel (SUS304) plate as the adherend, with respect to a specimen prior to storage (i.e., the initial PSA sheet) and specimens that had been stored under the following conditions, respectively: at 23 °C and 50 % RH for 7 days (7 day storage at RT), at 23 °C and 50 % RH for 14 days (14 day storage at RT), at 40 °C and 92 % RH (hot/wet condition) for 3 days and subsequently placed at 23 °C and 50 % RH (3 day storage at 40 °C, 92 % RH), at 40 °C and 92 % RH (hot/wet condition) for 7 days and subsequently placed at 23 °C and 50 % RH (7 day storage at 40 °C, 92 % RH), and at 40 °C and 92 % RH (hot/wet condition) for 14 days and subsequently placed at 23 °C and 50 % RH (14 day storage at 40 °C, 92 % RH). The peel property under a constant load was evaluated by measuring in an environment at 50 °C and 80 % RH (hot/wet condition) the peeled length of a specimen after a lapse of 24 hours instead of 18 hours from the application of a 100 g (0.98 N) load on one end of the specimen in the constant-load peel test.

[Table 8]

**Table 8**

| | | g1 | g2 | g3 | g4 | g5 |
|---|---|---|---|---|---|---|
| Base polymer (parts) | Quintac 3520 | 100 | 100 | 100 | 100 | 100 |
| | | | | | | |
| Low softening point resin (parts) | Terpene PX1150N | 30 | 30 | 30 | 30 | 30 |
| | | | | | | |
| High softening point resin (parts) | Terpene-phenol S145 (100 mgKOH/g) | 0 | 10 | 20 | 30 | 40 |
| | Terpene-phenol T145 (60 mgKOH/g) | 40 | 30 | 20 | 10 | 0 |
| | | | | | | |
| Isocyanate (parts) | CORONATE L | 0.75 | 0.75 | 0.75 | 0.75 | 0.75 |
| | | | | | | |
| 180° peel strength (N/20mm) Stored at RT | Initial | 31.7 | 27.7 | 35.5 | 35.5 | 28.0 |
| | 7 days | 32.8 | 30.0 | 29.3 | 28.7 | 24.0 |
| | 14 days | - | 30.5 | 30.7 | 28.7 | 23.7 |
| | | | | | | |
| 180° peel strength (N/20mm) Stored at 40°C, 92%RH | 3 days | 34.3 | 29.3 | 27.0 | 23.8 | 23.3 |
| | 7 days | 54.0 | 29.0 | 26.7 | 24.3 | 22.3 |
| | 14 days | - | 31.3 | 30.0 | 27.3 | 23.0 |
| | | | | | | |
| Repulsion resistance (mm) | 24hr at RT | 0.63 | 0.56 | 0.56 | 0.44 | 0.44 |
| | 4hr at 70°C, 80%RH | - | - | - | - | - |
| | 12hr at 70°C, 80%RH | 1.19 | 1.19 | 1.00 | 0.81 | 0.75 |
| | | | | | | |
| Peel under constant load (mm) hot/wet condition 24hr at 50°C, 80%RH | ABS | 50 | 50 | 17.5 | 11 | 8 |
| | PC/ABS | 50 | 50 | 31 | 17.5 | 14 |
| | HIPS | 50 | 50 | 23.5 | 13 | 11 |

As shown in Table 8, with respect to double-faced PSA sheets g2 to g5 each using a terpene-phenol resin (S145) having a hydroxyl value of 100 mgKOH/g solely or in combination with a terpene-phenol resin (T145) having a hydroxyl value of 60 mgKOH/g, when compared to double-faced PSA sheet g1 using solely T145 as the terpene phenol resin, they all exhibited clearly higher resistance against continuous stress. In particular, significant improvements were observed in their peel properties under a constant load in a hot/wet condition, confirming that similar effects as Experimental Example 1 (Table 1) were obtainable with the compositions according to the present experimental example. When compared to g5 using solely S145 as the terpene-phenol resin, g2 to g4 using S145 and T145 together exhibited clearly greater peel strength after aged. In particular, for double-faced PSA sheets g3 and g4 containing S145 as much as 0.9 to 4 times (more specifically, 1 to 3 times) T145 based on the mass, high levels of resistance against continuous stress and aged peel strength were achieved at the same time.

Although specific embodiments of the present invention have been described in detail above, these are merely for illustrations and do not limit the scope of the claims. The art according to the claims includes various modifications and changes made to the specific embodiments illustrated above.

The PSA composition or the PSA sheet disclosed herein is useful for joining components in various OA devices, home appliances, automobiles, and so on (e.g., for fastening various components in such products). In particular, they are preferable for attaching a flexible resin sheet (e.g., a plastic film of about 0.05 mm to 0.2 mm thickness) to a case made of a resin such as ABS, HIPS, PC/ABS blend, or the like. Examples of a product having such a joint part include toner cartridges, printers, notebook PCs, mobile devices, and the like.

## Claims

1. A pressure-sensitive adhesive composition comprising:
a base polymer consisting of a block copolymer of a mono-vinyl-substituted aromatic compound and a conjugated diene compound, and
a tackifier resin (T_{H}) having a hydroxyl value of 80 mgKOH/g or higher.

2. The pressure-sensitive adhesive composition according to Claim 1, comprising, as the tackifier resin (T_{H}), a high softening point resin having a softening point of 120 °C or above.

3. The pressure-sensitive adhesive composition according to Claim I or 2, comprising a terpene-phenol resin as the tackifier resin (T_{H}).

4. The pressure-sensitive adhesive composition according to any one of Claims 1 to 3, further comprising a tackifier resin (T_{L}) having a hydroxyl value lower than 80 mgKOH/g.

5. The pressure-sensitive adhesive composition according to Claim 4, comprising, as the tackifier resin (T_{L}), at least one of a petroleum resin and a terpene resin.

6. The pressure-sensitive adhesive composition according to Claim 4 or 5, comprising, as the tackifier resin (T_{L}), a low softening point resin having a softening point below 120 °C.

7. The pressure-sensitive adhesive composition according to any one of Claims 4 to 6, comprising, as the tackifier resin (T_{L}), a high softening point resin having a softening point of 120 °C or above.

8. The pressure-sensitive adhesive composition according to any one of Claims 1 to 7, wherein the base polymer consists of at least one of a styrene-isoprene block copolymer and a styrene-butadiene block copolymer.

9. The pressure-sensitive adhesive composition according to any one of Claims 1 to 8, comprising, as the tackifier resin, a terpene-phenol resin A and a terpene-phenol resin B, wherein the terpene-phenol resin A has a hydroxyl value of A_{OH} (mgKOH/g) and the terpene-phenol resin B has a hydroxyl value of B_{OH} (mgKOH/g), with A_{OH} being higher than B_{OH}.

10. The pressure-sensitive adhesive composition according to Claim 9, wherein A_{OH} is 80 mgKOH/g or higher and B_{OH} is lower than 80 mgKOH/g.

11. The pressure-sensitive adhesive composition according to Claim 9 or 10, comprising the terpene-phenol resin A and the terpene-phenol resin B at a A-to-B mass ratio of 1:5 to 5:1.

12. The pressure-sensitive adhesive composition according to any one of Claims 9 to 11, wherein both the terpene-phenol resin A and the terpene-phenol resin B are high softening point resins each having a softening point of 120 °C or above.

13. A pressure-sensitive adhesive sheet comprising a pressure-sensitive adhesive layer formed from a pressure-sensitive adhesive composition according to any one of Claims 1 to 12.

14. A pressure-sensitive adhesive sheet comprising a pressure-sensitive adhesive layer, with the pressure-sensitive adhesive layer comprising:
a base polymer consisting of a block copolymer of a mono-vinyl-substituted aromatic compound and a conjugated diene compound, and
a tackifier resin (T_{H}) having a hydroxyl value of 80 mgKOH/g or higher.
